# FASCICULE DE BREVET EUROPEEN

(11) **EP 3 458 896 B1**
(45) Date de publication et mention de la délivrance du brevet: **22.12.2021**
(21) Numéro de dépôt: 17730844.2
(22) Date de dépôt: 15.05.2017
(51) Int. Cl.: G02B 21/34, G02B 21/26, B01L 1/00, G06K 7/00, G06K 19/06, H04N 17/00

(54) **DISPOSITIF ET PROCÉDÉ DE MICRO-LOCALISATION POUR INSTRUMENT IMAGEUR ET APPAREIL DE MESURE**
MIKROLOKALISIERUNGSVERFAHREN UND MIKROLOKALISIERUNGSVORRICHTUNG FÜR BILDGEBUNGSINSTRUMENT UND EINE MESSVORRICHTUNG
MICRO-LOCALISATION METHOD AND DEVICE FOR AN IMAGING INSTRUMENT AND A MEASURING APPARATUS

(30) Priorité: 17.05.2016 FR 1654378
(43) Date de publication de la demande: 27.03.2019
(73) Titulaire: HORIBA France SAS, 91120 Palaiseau (FR)
(72) Inventeur: ACHER, Olivier, GIF-SUR-YVETTE 91190 (FR); RICHARD, Simon, 91120 PALAISEAU (FR); GAILLET, Mélanie, 91630 Cheptainville (FR); PODZOROV, Alexander, 91400 ORSAY (FR); KNOWLES, Adrian, Stanmore Middlesex HA7 4TY (GB)
(74) Mandataire: Jacobacci Coralis Harle
(86) Numéro de dépôt international: PCT/FR2017/051171
(87) Numéro de publication internationale: WO 2017/198939

(56) Documents cités:
- FR-A1- 2 993 988
- US-A1- 2012 256 007
- US-A1- 2014 049 818
- US-A1- 2016 124 431

## Description

### DOMAINE TECHNIQUE AUQUEL SE RAPPORTE L'INVENTION

La présente invention concerne un dispositif et un procédé de repérage spatial pour un système de caractérisation d'un échantillon.

Elle concerne plus particulièrement un dispositif de repérage en position et en orientation pour un microscope ou instrument de métrologie permettant d'obtenir une précision et une répétabilité de positionnement sub-micrométrique ou même nanométrique sur l'échantillon.

Elle concerne enfin un procédé de repérage en position et en orientation d'un instrument de métrologie ou d'analyse.

### ARRIERE-PLAN TECHNOLOGIQUE

Avec l'avènement de l'ère des nanotechnologies, la capacité d'effectuer des mesures extrêmement précises afin de contrôler la fabrication, le fonctionnement et le vieillissement de différents composants à l'échelle nanométrique est devenue primordiale. Les problèmes récurrents sont alors la re-localisation et la co-localisation des mesures effectuées à différents instants de temps et/ou avec différents instruments de mesure. A titre d'exemple, différents types de mesure peuvent être des mesures de microscopie optique, de microscopie Raman, de microscopie électronique formant une image de l'échantillon avec une résolution spatiale micrométrique ou sub-micrométrique.

Dans le présent document, on entend par précision en position et/ou en orientation à la fois la notion de précision absolue (accuracy en anglais) et de répétabilité (repeatability en anglais).

Par re-localisation des mesures, on entend ici la possibilité d'effectuer des mesures en un même emplacement d'un échantillon à différents instants dans le temps, l'échantillon ayant éventuellement subi un certain traitement physique, chimique ou autre entre plusieurs mesures. La précision de relocalisation actuellement demandée dépend de la structure de l'échantillon et de la résolution spatiale de chaque type de mesure, mais se situe généralement à l'échelle micrométrique, sub-micrométrique ou nanométrique.

Par co-localisation des mesures, on entend ici la possibilité d'effectuer différentes mesures en un même emplacement d'un échantillon, chaque mesure apportant une information complémentaire par rapport aux autres mesures. Par exemple, les différentes mesures peuvent reposer sur un contraste physique ou chimique et/ou une résolution spatiale différente.

La re-localisation et la co-localisation des mesures nécessitent premièrement une haute précision spatiale puisqu'il s'agit ici de la précision du positionnement d'un faisceau incident et/ou d'un système de détection par rapport à l'échantillon pour effectuer une mesure localisée. La re-localisation et la co-localisation des mesures nécessitent deuxièmement une haute répétabilité des mesures. En effet, il est essentiel de pouvoir répéter une mesure dans des conditions identiques et d'obtenir le même résultat sur un échantillon stable. Ces conditions de précision et de répétabilité sont indispensables pour permettre de transférer l'échantillon pour l'analyser par des techniques différentes.

Les problématiques de re-localisation et de co-localisation des mesures peuvent être ramenées à celles d'un transfert de coordonnées d'un système de coordonnées de référence au système de coordonnées de l'instrument de mesure. Dans ce domaine, il existe aujourd'hui plusieurs solutions.

Il est connu, par exemple, du document US 7630628 B2 un dispositif de caractérisation comportant un système de positionnement permettant de positionner l'instrument de mesure par rapport à l'échantillon à caractériser en un point de mesure localisé de l'échantillon. Le système de positionnement du document US 7630628 B2 comprend notamment une platine porte-échantillon sur laquelle on a déposé l'échantillon, des moyens de pilotage permettant de déplacer cette platine de manière précise et répétable. Ceci permet, si l'échantillon est solidaire de la platine porte-échantillon et si l'échantillon n'est pas manipulé entre deux prises de mesure, d'effectuer deux mesures en deux points de mesure sensiblement identiques. Cependant, le système de positionnement du document US 7630628 B2 ne permet pas de connaître la position de l'instrument de mesure par rapport à l'échantillon, c'est-à-dire de positionner de manière absolue l'instrument de mesure par rapport à l'échantillon.

Le document de brevet US 2013/0077160 A1 décrit une unité de marque d'alignement pour un porte-échantillon de microscope à imagerie. L'unité de marque d'alignement comporte un ou plusieurs motifs géométriques ou alphanumériques, de tailles différentes, par exemple en forme de lettre L. Le motif présente avantageusement une asymétrie de rotation et des axes perpendiculaires naturels définissant l'orientation d'un système de coordonnées de référence. Pour définir le système de coordonnées de référence, l'opérateur doit positionner, manuellement ou automatiquement, un motif à une échelle adaptée en fonction du système d'imagerie. Ce dispositif nécessite un prépositionnement précis et souvent fastidieux. La précision de localisation est limitée par la taille du pixel et par la résolution du système d'imagerie et de traitement d'image. De plus, la précision en orientation angulaire est limitée, de l'ordre de Δα ~ 10⁻² radian. Cette limite de précision angulaire induit des erreurs de positionnement en fonction de la distance entre la marque d'alignement et l'échantillon : à une distance d ~ 5 mm, l'erreur de positionnement est proportionnelle à d Δα ~ 50 microns, ce qui est insuffisant dans des applications à l'échelle microscopique.

Le document de brevet US 2012/0133757 A1 décrit un dispositif porte-échantillon adaptable sur la platine de translation d'un microscope optique et d'un microscope électronique. Le porte-échantillon comporte trois marques d'alignement de forme géométrique visibles à l'œil nu et à distance l'une de l'autre. Les trois marques d'alignement définissent un repère de référence lié au porte-échantillon. Un système d'imagerie et un système de traitement d'image permettent de reconnaitre la position et l'orientation des marques d'alignement et de déterminer un système de coordonnées de référence. Des zones d'intérêt de l'échantillon peuvent être référencées dans ce système de coordonnées de référence et peuvent être retrouvées ultérieurement sur le même instrument ou sur un autre instrument tant que l'échantillon reste solidaire du porte-échantillon supportant les marques d'alignement. Toutefois, ce système nécessite un prépositionnement manuel précis pour parvenir à amener chaque marque d'alignement dans le champ de vue du système d'imagerie. Ce pré-positionnement est d'autant plus fastidieux que la marque d'alignement est de petite dimension par rapport à la taille de l'échantillon. De plus, ce système est limité à une gamme de grossissement restreinte : si une marque d'alignement est adaptée à un certain champ de vue instrumental, les instruments ayant un grossissement trop faible ne pourront pas la distinguer et les instruments ayant un grossissement trop élevé ne pourront pas en former une image entière. Par ailleurs, ce système offre une précision de localisation de l'ordre de la taille du pixel du système d'imagerie. En effet, lors du repérage manuel, la précision est conditionnée par l'action de l'opérateur et n'excède pas la taille d'un pixel. Dans le cas du repérage automatique, les motifs utilisés permettent de repérer leur position avec une précision de l'ordre du pixel. En outre, ce système nécessite l'utilisation d'au moins trois marques d'alignement séparées spatialement, la distance entre les marques d'alignement déterminant la précision angulaire dans chaque direction du système de coordonnées. Ce dispositif est par conséquent encombrant, car les trois marques d'alignement sont disposées loin de l'échantillon. Enfin, ce dispositif peut être sensible à des effets de dilatation thermique du support qui induisent une erreur de positionnement et limitent la précision de ce dispositif.

Enfin, on connait du document de FR 2993988 A1 une mire d'alignement solidaire de la face arrière d'un échantillon. Un système d'imagerie optique forme une image de la mire d'alignement. Un système de traitement d'image fournit à partir de cette image de la mire, la position et l'orientation de l'échantillon par rapport à un instrument de mesure sous réserve de calibration de l'instrument de mesure par rapport au système d'imagerie. Toutefois, cette mire d'alignement n'est pas adaptée à des grossissements très différents. Le document de brevet FR 2993988 A1 divulgue aussi une balise multimodale et multi-échelle comportant un motif de structure auto-similaire ne présentant pas de symétrie de rotation, formé par un dépôt métallique sur une lame de verre. D'une part, cette balise présente un contraste optique permettant son observation en microscopie optique à différents grossissements et est donc une balise multi-échelle. D'autre part, cette balise présente une structure topographique permettant son observation en microscopie électronique, ce qui la rend multimodale. Toutefois, la précision de positionnement et d'orientation de cette balise multimodale et multi-échelle est fondamentalement limitée par la taille d'un pixel.

Le document US 2016/124431 A1 décrit un dispositif de repérage multi-échelle comprenant des repères emboîtés. Le document US 2014/049818 A1 décrit une lame de microscope comprenant des points de référence disposés à des emplacements prédéterminés.

Un des buts de l'invention est de proposer un dispositif et une méthode permettant des mesures co-localisables à l'échelle nanométrique pour une grande variété d'instruments de mesure afin de réaliser une caractérisation multimodale d'un échantillon, c'est-à-dire d'analyser cet échantillon localement à l'échelle nanométrique par des techniques différentes.

Un autre but de l'invention est de permettre des mesures re-localisables en un même emplacement de l'échantillon avec une précision sub-micrométrique ou nanométrique pour réaliser des mesures à différents instants temporels ou pour réaliser une caractérisation multi-échelle centrée sur le même emplacement de l'échantillon, par exemple via un microscope à différents grossissements.

### OBJET DE L'INVENTION

Afin de remédier à l'inconvénient précité de l'état de la technique, la présente invention propose un dispositif de micro-localisation pour instrument imageur, le dispositif de micro-localisation définissant un système de coordonnées spatiales et étant adapté à être rendu solidaire d'un échantillon ou d'un porte-échantillon.

Plus particulièrement, on propose selon l'invention un dispositif de microlocalisation comportant au moins une première zone et une deuxième zone adjacentes, ladite première, respectivement deuxième, zone s'étendant spatialement sur une première, respectivement deuxième, surface de dimensions macroscopiques, ladite première, respectivement deuxième, zone ayant une position et une orientation prédéterminée dans le système de coordonnées spatiales du dispositif de microlocalisation, ladite première, respectivement deuxième, zone comprenant une cellule élémentaire ou un pavage de plusieurs cellules élémentaires s'étendant sur la première, respectivement deuxième, surface de ladite première, respectivement deuxième, zone, chaque cellule élémentaire de la première zone s'étendant sur une première surface élémentaire, chaque cellule élémentaire de la deuxième zone s'étendant sur une deuxième surface élémentaire différente de la première surface élémentaire, la première, respectivement deuxième, surface élémentaire s'étendant dans une gamme de dimension allant du sub-micrométrique au macroscopique, chaque cellule élémentaire de la première zone comportant un premier motif spatial périodique associé à une première période spatiale fonction de la première surface élémentaire, et, respectivement, chaque cellule élémentaire de la deuxième zone comportant un deuxième motif spatial périodique associé à une deuxième période spatiale différente de la première période spatiale, fonction de la deuxième surface élémentaire, chaque cellule élémentaire de ladite première zone, et respectivement deuxième zone, comprenant en outre un motif d'orientation et un motif de positionnement dans le système de coordonnées spatiales du dispositif de micro-localisation, au moins une desdites première ou deuxième cellule élémentaire étant adaptée pour que ledit instrument imageur en forme une image et en déduise une position, respectivement, une orientation de ladite image dans le système de coordonnées spatiales du dispositif de micro-localisation.

Ce dispositif de micro-localisation permet de positionner facilement l'instrument imageur sur la première zone et/ou sur la deuxième zone, qui sont de dimension macroscopique, tout en fournissant une image d'au moins une cellule élémentaire de la première zone et/ou de la deuxième zone. Un système de traitement d'image permet d'analyser l'image ainsi formée pour en déduire d'une part la période spatiale associée, et d'autre part, la position et l'orientation de la cellule imagée dans le repère du dispositif de micro-localisation. Pour cela il suffit que la surface d'une cellule soit inférieure ou égale au champ objet de l'instrument imageur et que la période spatiale du motif périodique associé à la zone de la cellule imagée soit supérieure à la résolution spatiale de l'instrument imageur. La platine de translation qui permet le déplacement relatif de l'échantillon par rapport à l'instrument imageur peut ensuite être calibrée pour permettre de déterminer très précisément une position de mesure sur un échantillon rendu solidaire du dispositif de micro-localisation. Ce dispositif de micro-localisation permet aisément de déterminer les coordonnées de l'instrument imageur dans le repère du dispositif de microlocalisation, et ainsi de localiser une position de mesure sur un échantillon avec une précision et une répétabilité micrométrique, sub-micrométrique ou même nanométrique.

D'autres caractéristiques non limitatives et avantageuses du dispositif de microlocalisation conforme à l'invention, prises individuellement ou selon toutes les combinaisons techniquement possibles, sont les suivantes :
- la surface de la première zone est égale à la surface de la deuxième zone ;
- la première période spatiale est supérieure ou égale au double de la deuxième période spatiale, ou au décuple de la deuxième période spatiale ;
- le premier motif spatial périodique couvre au moins cinquante pourcents de la surface de chaque cellule élémentaire de la première zone, et/ou, respectivement, le deuxième motif spatial périodique couvre au moins cinquante pourcents de la surface de chaque cellule élémentaire de la deuxième zone ;

- chaque cellule élémentaire comprend en outre un motif d'identification ;
- le premier motif spatial périodique est périodique suivant deux directions transverses avec la même première période spatiale et/ou le deuxième motif spatial périodique est périodique suivant lesdites deux directions transverses avec la même deuxième période spatiale ;
- le dispositif de micro-localisation comporte en outre au moins une autre zone spatialement uniforme sur toute sa surface ;
- le motif d'orientation, le motif de positionnement et le motif spatial périodique sont formés par dépôt et/ou gravure de couche mince métallique ;
- chaque cellule élémentaire est de forme polygonale, de préférence carrée, ayant un côté de longueur égale à un multiple entier compris entre une unité et quelques dizaines de la période spatiale du motif spatial périodique de ladite cellule élémentaire ;
- le dispositif de micro-localisation comporte au moins une zone disjointe de la première zone, chaque cellule élémentaire de la zone disjointe comportant le même premier motif spatial périodique associé à la même première période spatiale et chaque cellule élémentaire de la zone disjointe s'étendant sur une surface élémentaire fonction de la première période spatiale ;
- le dispositif de micro-localisation comporte une pluralité de zones disposées de manière à former un dispositif de micro-localisation de forme asymétrique à une échelle macroscopique ;
- le dispositif de micro-localisation comporte une pluralité de zones, chaque zone de la pluralité de zones s'étendant spatialement sur une surface de dimension macroscopique, chaque zone de la pluralité de zones comprenant une cellule élémentaire ou un pavage de plusieurs cellules élémentaires s'étendant sur la surface respective de ladite zone, les zones de ladite pluralité de zones étant disposées autour d'un point de jonction commun à une cellule élémentaire de chacune desdites zones, chaque cellule élémentaire de chacune desdites zones autour du point de jonction étant associée de manière biunivoque d'une part à une surface élémentaire et d'autre part à un motif spatial périodique fonction de la surface élémentaire de ladite zone.

L'invention propose également un porte-échantillon pour appareil de microscopie comportant au moins un dispositif de micro-localisation selon l'un des modes de réalisation.

L'invention propose également un appareil de mesure comprenant un instrument imageur, un porte-échantillon, une unité de contrôle et au moins un dispositif de micro-localisation, le dispositif de micro-localisation étant solidaire d'un échantillon ou du porte-échantillon, l'instrument imageur étant configuré pour acquérir une image, par exemple une image de microscopie d'un échantillon, l'unité de contrôle étant configurée pour fournir les coordonnées de ladite image dans le système de coordonnées du dispositif de micro-localisation.

Dans un mode de réalisation particulier, l'appareil de mesure comprend en outre un système de déplacement du porte-échantillon intégrant un dispositif de mesure de déplacement du porte-échantillon dans un système de coordonnées de ce système de déplacement, l'unité de contrôle étant configurée pour commander un déplacement du porte-échantillon dans le système de coordonnées du dispositif de micro-localisation. De préférence, l'appareil de microscopie comporte une platine de déplacement en translation, suivant une, deux ou trois directions transverses, la platine de déplacement comprenant au moins un dispositif de micro-localisation.

Dans un autre mode de réalisation particulier, l'appareil de mesure comprend un dispositif de balayage d'un faisceau incident par rapport à un échantillon, l'unité de contrôle est configurée pour commander un déplacement par balayage du faisceau incident, et l'unité de contrôle comprend un système de traitement du signal adapté pour reconstruire une image point par point en fonction du balayage de faisceau dans le système de coordonnées du dispositif de micro-localisation. Par exemple, le système de balayage de faisceau est adapté pour effectuer un balayage d'un faisceau de photons ou d'un faisceau de particules suivant une ou deux directions transverses par rapport à l'échantillon.

Dans un autre mode de réalisation particulier, l'appareil de mesure comprend un appareil de microscopie à sonde locale ayant une pointe et un système de déplacement relatif entre ladite pointe et un échantillon à analyser, et l'unité de contrôle comprend un système de traitement du signal adapté pour reconstruire une image point par point en fonction du déplacement par balayage de la sonde locale dans le système de coordonnées du dispositif de micro-localisation.

L'invention concerne aussi un procédé de micro-localisation d'un échantillon comprenant les étapes suivantes :
- solidariser un dispositif de micro-localisation avec un porte-échantillon ou un échantillon à analyser de manière à définir un système de coordonnées spatiales lié audit échantillon,
- disposer un instrument imageur de manière à former une image d'au moins une cellule élémentaire du dispositif de micro-localisation,
- traiter ladite image d'au moins une cellule élémentaire d'une zone, pour en extraire, d'une part, une orientation et une position de la cellule élémentaire dans le repère du dispositif de micro-localisation, et, d'autre part, une période spatiale associée à la zone du dispositif de micro-localisation pour en déduire une orientation et une position de ladite image dans le système de coordonnées spatiales du dispositif de microlocalisation.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente une image d'une partie d'une mire de localisation selon l'art antérieur ;
- la figure 2 représente une vue schématique d'une cellule élémentaire de mire de localisation illustrant un codage de motifs d'identification, d'orientation et de position;
- la figure 3 représente schématiquement une vue macroscopique d'un dispositif de micro-localisation composée d'une pluralité de zones selon un mode de réalisation ;
- la figure 4A représente une vue schématique d'un exemple d'une première zone d'un dispositif de micro-localisation, cette première zone comportant une seule cellule élémentaire ;
- la figure 4B représente une vue schématique d'un exemple d'une deuxième zone d'un dispositif de micro-localisation, cette deuxième zone comportant un pavage de quatre cellules élémentaires ;
- la figure 5 représente schématiquement une vue macroscopique d'un autre dispositif de micro-localisation comportant quatre zones de micro-localisation et une marque macroscopique ;
- la figure 6 représente schématiquement en vue de coté un instrument imageur en position de mesure face à un dispositif de micro-localisation (Figure 6A) et, respectivement, face à un échantillon (Figure 6B) ;
- la figure 7 représente schématiquement en vue de dessus un appareil de microscopie muni d'un dispositif de micro-localisation selon un mode de réalisation ;
- la figure 8 représente schématiquement une vue agrandie d'une image d'une jonction entre quatre zones différentes d'un dispositif de micro-localisation;
- la figure 9 représente une vue macroscopique illustrant le positionnement du champ de vision d'un instrument imageur sur un dispositif de micro-localisation ;
- la figure 10 illustre des points de différents trajets utilisés pour la calibration d'un système de déplacement du porte-échantillon et/ou du balayage d'un faisceau de mesure par rapport au système de coordonnées d'un dispositif de micro-localisation ;
- la figure 11 illustre des points d'autres trajets utilisés pour la calibration d'un système de déplacement du porte-échantillon et/ou du balayage d'un faisceau de mesure par rapport au système de coordonnées d'un dispositif de micro-localisation ;
- la figure 12 représente une vue macroscopique d'un autre exemple d'un dispositif de micro-localisation comportant des zones disjointes affectées à la même période spatiale et des points de différents trajets utilisés pour la calibration d'un système de déplacement du porte-échantillon et/ou du balayage d'un faisceau de mesure ;
- la figure 13 illustre un procédé de calibration et de positionnement sur un échantillon en utilisant un dispositif de micro-localisation ;
- la figure 14 illustre un autre procédé de calibration et de positionnement sur un échantillon en utilisant un dispositif de micro-localisation ;
- la figure 15 représente une vue d'un porte-échantillon comportant plusieurs dispositifs de micro-localisation.

### Dispositif

Dans le présent document, on utilise de manière équivalente les termes de référentiel, repère ou système de coordonnées. Un tel repère comprend au moins une position spatiale de référence et au moins une dimension spatiale, et de préférence deux dimensions spatiales ou même trois dimensions spatiales. Le repère est de préférence orthonormé.

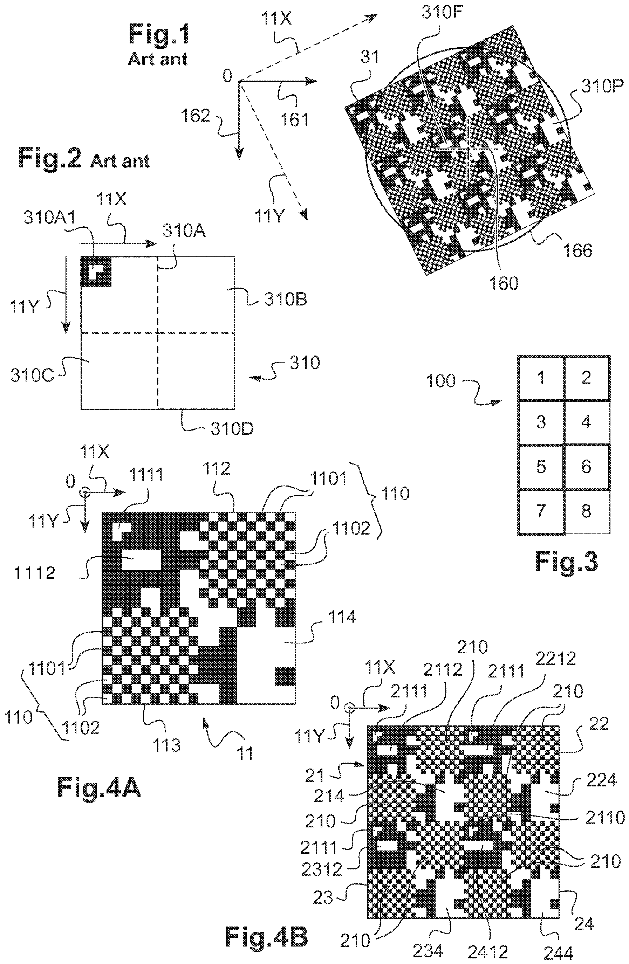

Sur la figure 1, on a représenté une image d'une partie d'une mire de localisation 31 selon l'art antérieur et, en superposition, une partie centrale du champ de vision d'un instrument imageur disposé pour former une image de cette mire de localisation 31.

Cette mire de localisation 31 comprend un support et au moins une couche comportant des motifs micro-structurés. Cette mire de localisation 31 est destinée à être fixée sur une face plane d'un échantillon. De façon avantageuse, la couche comportant des motifs présente un contraste optique adapté pour être imagé par un système d'imagerie optique ayant un grossissement et une résolution adaptés pour former une image des motifs micro-structurés. De façon particulièrement avantageuse, la mire de calibration 31 est réalisée par un dépôt métallique sur une lame de verre, lui conférant, d'une part un contraste optique suffisant pour être observée par microscopie optique avec différents grossissements et par microscopie électronique, et, d'autre part, une structure topographique observable au moyen d'un microscope à force atomique.

La figure 1 représente un repère formé d'un point O et des axes orthogonaux 11X et 11Y. Ce repère orthonormé (O, 11X, 11Y) forme un système de coordonnées lié à la mire de localisation 31. La figure 1 représente un autre repère formé d'une croix centrée en un point 160 et des axes orthogonaux 161 et 162. Ce repère (160, 161, 162) forme un système de coordonnées lié à l'instrument imageur. Dans un exemple de réalisation, l'instrument imageur comporte une matrice de détecteurs, ou matrice de pixels, et un système optique de formation d'image conjuguant optiquement la mire de localisation avec la matrice de détecteurs. Le cercle 166 représente schématiquement le champ de vision de l'instrument imageur, le point 160 étant sur l'axe du système optique de formation d'image. Une calibration basée sur la détection de l'image d'une partie de la mire permet de déterminer la formule de transfert de coordonnées entre le système de coordonnées (O,11X,11Y) lié à la mire de localisation 31 et le système de coordonnées (160, 161, 162) lié à l'instrument imageur.

Plus précisément, la mire de calibration 31 comporte une pluralité de cellules élémentaires formant un pavage régulier à deux dimensions.

Chaque cellule élémentaire 310 comporte un motif de positionnement indiquant la position de ladite cellule élémentaire dans le repère (O,11X,11Y) de la mire de localisation 31 et un motif d'orientation indiquant l'orientation de ladite cellule élémentaire dans le repère (O,11X,11Y) de la mire de localisation 31. De plus, chaque cellule élémentaire 310 comporte au moins un motif périodique, illustrés sous forme de damier noir et blanc sur la figure 1, permettant d'améliorer la précision du positionnement de l'instrument imageur par rapport au repère (O,11X,11Y). De façon particulièrement avantageuse, chaque cellule élémentaire 310 comporte un motif d'identification codant pour des informations relatives à la mire de localisation et/ou à l'échantillon à analyser.

La figure 2 représente schématiquement un exemple de structure d'une cellule élémentaire 310. La cellule élémentaire 310 comporte ici quatre sous-cellules distinctes 310A (sous-cellule en haut à gauche de la cellule élémentaire 310), 310B (en haut à droite), 310C (en bas à gauche), et 310D (en bas à droite). Chaque sous-cellule 310A, 310B, 310C, 310D est ici carrée et d'arête 100 microns environ. La sous-cellule 310A comporte un motif d'orientation 310A1 dont l'orientation est prédéterminée par rapport aux axes 11X, 11Y de la mire de localisation 31. Ici, le motif d'orientation 310A1 est en forme de L, chaque branche du L étant parallèle à l'axe 11X ou 11Y. On observe par ailleurs sur la figure 1 que chaque cellule élémentaire comporte ici un motif d'orientation identique, de même forme et de même dimension, disposé et orienté de la même manière dans chaque cellule élémentaire par rapport au repère (O,11X,11Y). Le reste de la sous-cellule 310A forme ici un motif à deux dimensions codant le positionnement propre à chaque cellule élémentaire et déterminant la position de cette cellule élémentaire dans le repère (0,11X,11Y) de la mire de localisation 31.

Chaque cellule élémentaire 310 comporte au moins un motif périodique. Dans l'exemple illustré sur la figure 2, toutes les cellules élémentaires comportent chacune deux sous-cellules 310B et 310C ayant un même motif périodique. Ce motif périodique est constitué d'un damier de carrés blancs et noirs, comprenant au moins deux lignes et deux colonnes. Dans l'exemple représenté, chaque damier comprend dix lignes et dix colonnes de dix carrés alternativement blancs et noirs, soit un total de 100 carrés. Tous les carrés sont de la même dimension sur toute la surface de la mire de localisation. Dans cet exemple, chaque carré du damier a un côté de longueur égale à 10 microns environ.

Ce motif périodique permet d'améliorer la précision du positionnement du système imageur par rapport à la mire de localisation 31.

Chaque cellule élémentaire 310 comporte une sous-cellule 310D qui est un motif à deux dimensions codant une identification de la cellule 310. De façon avantageuse, le motif d'identification des sous-cellules 310D est identique pour chacune des cellules élémentaires 310 de la mire de localisation 31, de telle sorte qu'il code à chaque fois pour les mêmes informations relatives à l'échantillon et/ou à la mire de localisation 31, par exemple la référence de l'échantillon et la taille d'un carré du motif périodique de la sous-cellule 310B ou 310C. En variante, le motif d'identification peut, par exemple, coder une référence de la mire de localisation, une échelle de la cellule élémentaire, un code permettant d'interpréter correctement les informations de localisation de la mire de localisation. En variante encore, le motif d'identification peut aussi être différent pour chacune des cellules élémentaires de la mire de localisation.

L'instrument imageur comporte des moyens d'acquisition et de traitement d'images. L'instrument imageur est disposé et configuré de manière à capturer une image d'une partie de la mire de localisation 31. Plus précisément, l'instrument imageur est configuré pour former une image 310P d'une ou de plusieurs cellules élémentaires 310 de la mire de localisation 31.

En particulier sur la figure 1, l'instrument imageur est agencé de manière avantageuse de telle sorte que l'image de la partie de la mire de localisation 31 comporte une image entière d'une cellule élémentaire centrale 310F comportant :
- une image du motif de positionnement et du motif d'orientation de cette cellule élémentaire 310F,
- une image du motif périodique de cette cellule élémentaire 310F et
- une image du motif d'identification de cette cellule élémentaire 310F.

L'instrument imageur acquiert une image d'au moins une partie de la mire de localisation 31, cette image se formant avantageusement dans le plan d'une matrice de détecteurs. Le champ objet de l'instrument imageur optique ne couvrant pas ici toute la mire de localisation 31, la partie de la mire de localisation 31 qui est imagée par l'instrument imageur optique 322 est (voir figure 1) par exemple délimitée par le cercle noir.

Pour déterminer la position et l'orientation de l'instrument imageur par rapport à la mire de localisation, le système de traitement d'images analyse l'image de la partie de la mire de localisation acquise par l'instrument imageur optique. Le système de traitement d'image exploite l'image acquise pour identifier une cellule élémentaire et en extraire les informations particulières codées dans les différentes sous-cellules d'une cellule élémentaire 310 de la mire de localisation 31.

Plus précisément, l'image d'une partie de la mire de localisation 31 est analysée par des techniques classiques de reconnaissance de formes, de manière à identifier au moins un et de préférence plusieurs motifs d'orientation présents dans l'image. Le système de traitement d'image en déduit l'orientation du ou des motifs d'orientation par rapport aux deux axes 161 et 162 de l'instrument imageur. L'orientation du ou des motifs d'orientation par rapport aux axes 11X et 11Y de la mire étant connue, les moyens d'analyse d'images déterminent ainsi l'orientation des deux axes 161 et 162 de l'instrument imageur par rapport aux deux axes 11X, 11Y la mire de localisation 31. Dans le cas représenté sur la figure 1, cette orientation relative peut être, par exemple, simplement quantifiée par la mesure de l'angle orienté entre l'axe 161 et l'axe 11X.

De manière analogue, le système de traitement d'image détermine la position d'un point 160 de l'instrument imageur optique par rapport au repère (O, 11X, 11Y) de la mire de localisation 31. Pour cela, le système de traitement d'image identifie en particulier la cellule élémentaire centrale 310F contenant le centre image 160. Le système de traitement d'image décode le motif de positionnement de la cellule élémentaire centrale 310F afin de déterminer un premier positionnement du centre image 160 par rapport à la mire de localisation 31. Par exemple, le système de traitement d'image identifie par reconnaissance de forme le motif de positionnement de la cellule élémentaire centrale 310F et en déduit la valeur du premier nombre binaire codant la position de la cellule élémentaire centrale 310F selon l'axe 11X et la valeur du deuxième nombre binaire codant la position de la cellule élémentaire centrale 310F selon l'axe 11Y.

Les moyens d'analyse d'images déterminent alors un second positionnement du centre image 322 par rapport à la mire de localisation 31. Ce second positionnement, plus précis, est réalisé au moyen de la ou des sous-cellules comportant le motif périodique en damier de la cellule élémentaire centrale 310F.

En effet, par des techniques classiques de traitement d'images, le système de traitement d'image permet de déterminer un positionnement sub-pixel des sous-cellules à motif périodique, c'est-à-dire que, par exemple, la position de chacune de ces sous-cellules est déterminée avec une précision meilleure que le 3/100ème de pixel. Pour cela, le grandissement de l'instrument imageur est choisi de telle sorte que chaque carré des damiers couvre une surface équivalente à environ six à douze pixels.

Ainsi, le motif périodique des sous-cellules 310B, 310C permet d'améliorer la précision du positionnement du centre image 160 dans le repère (O, 11X, 11Y) de la mire de localisation 31. Par conséquent, ce motif périodique permet d'améliorer la précision du positionnement de l'instrument imageur par rapport à l'échantillon 11.

Ainsi, le système de traitement d'image détermine à partir de l'image d'une partie de la mire de localisation 31 :
- l'orientation des axes (161, 162) de l'instrument imageur par rapport aux axes (11X, 11Y) du repère de la mire de localisation 31 grâce à l'identification d'au moins un motif d'orientation d'une cellule élémentaire présente dans l'image détectée, et
- la position d'un point 160 de l'instrument imageur dans le repère (O, 11X, 11Y) de la mire de localisation 31 grâce à la lecture du motif de positionnement d'une cellule élémentaire centrale 310F et au positionnement sub-pixel des sous-cellules de la cellule élémentaire centrale 310F qui comprennent un motif périodique.

Une mire illustrée sur la figure 1, composée d'un pavage de cellules élémentaires telles que schématisées sur la figure 2, permet ainsi de déterminer la position et l'orientation en tout point de l'échantillon par rapport au référentiel de l'instrument imageur. Lorsque l'instrument de mesure est distinct du système d'imagerie, il suffit de calibrer le transfert de coordonnées entre l'instrument de mesure et le système d'imagerie pour déterminer la position du point mesuré par l'instrument de mesure.

Néanmoins, il découle de la présente divulgation qu'une mire de localisation dont l'image est représentée sur la figure 1 n'est pas adaptée à des grossissements très différents. En effet, si la taille d'une cellule élémentaire n'est pas adaptée au grossissement de l'instrument imageur, ce système d'imagerie n'est pas capable d'analyser l'image pour en déduire la position et l'orientation de la mire parce que les motifs peuvent être soit trop gros, auquel cas on ne forme pas l'image d'une cellule élémentaire complète, ou, au contraire, trop petits, auquel cas le nombre de pixels du système de détection est insuffisant pour analyser l'image d'une cellule élémentaire.

La présente divulgation propose un dispositif de micro-localisation pour un système d'imagerie permettant de positionner de manière extrêmement précise un instrument de mesure équipé d'un système d'imagerie quelconque par rapport à un échantillon.

La figure 3 représente, à une échelle macroscopique, un dispositif de microlocalisation 100 selon un premier mode de réalisation. Un tel dispositif de microlocalisation est destiné à être rendu solidaire de l'échantillon, d'un porte-échantillon ou d'une platine de déplacement. Le dispositif de micro-localisation 100 peut se présenter sous la forme d'une feuille autocollante comportant un substrat transparent ou réfléchissant et au moins une couche comportant des motifs micro-structurés ou nanostructurés.

Ce dispositif de micro-localisation est compatible avec plusieurs échelles de grossissement de systèmes d'imagerie. De façon particulièrement avantageuse, ce dispositif de micro-localisation est par exemple constitué de microstructures métalliques pouvant être imagées par différents systèmes d'imagerie optique ou à faisceau de particules ou à sonde locale de façon à constituer un dispositif de micro-localisation multimodal.

On a représenté, sur la figure 3, un exemple de dispositif de micro-localisation 100. Ce dispositif de micro-localisation 100 se présente sous la forme d'un objet généralement plan. Les dimensions de ce dispositif de micro-localisation 100 sont par exemple de 4 mm * 2 mm. Le dispositif de micro-localisation 100 comporte 8 zones. Dans cet exemple, les zones numérotées de 1 à 8 ont toutes la même forme carrée de 1 mm de côté et une même superficie de 1mm². Les zones 1-8 sont ici disposées en lignes et en colonnes adjacentes les unes aux autres. Plus précisément, chaque zone 1, respectivement 2, 3, 5, 6, 7 remplie de motifs quasi-périodiques est adaptée à un système d'imagerie différent. Ainsi, la période spatiale des cellules élémentaires est choisie en fonction du grossissement du système d'imagerie et du champ observé. D'une part, la dimension des cellules élémentaires est telle qu'au moins une cellule élémentaire complète soit incluse dans le champ d'observation du système d'imagerie. D'autre part, les motifs de cette cellule élémentaire sont suffisamment grands pour que l'instrument imageur et le système de traitement d'image puissent former et analyser l'image de ces motifs élémentaires.

Enfin, la surface de chaque zone 1-8 est suffisamment grande pour faciliter le pré-positionnement du système d'observation et d'imagerie sur la zone choisie ou à l'interface entre deux zones ou encore au point de jonction entre plusieurs zones.

De façon particulièrement avantageuse, les motifs présentent un contraste vis-à-vis de différents systèmes d'imagerie. Ainsi, une zone destinée à être imagée au travers d'un microscope optique est avantageusement constituée de motifs réfléchissants et non réfléchissants dans le domaine de rayonnement optique. Par ailleurs, une autre zone destinée à être imagée au travers d'un microscope atomique est avantageusement constituée de motifs présentant des marches topographiques. Enfin, une zone destinée à être imagée au travers d'un microscope électronique à balayage comporte des motifs présentant un contraste important vis-à-vis des électrons tout en permettant l'écoulement des charges.

Selon un mode de réalisation particulier, le dispositif de micro-localisation comporte en outre une ou plusieurs marques macroscopiques permettant un prépositionnement au travers d'un système d'imagerie à grand champ et faible grossissement, complété par exemple d'un système de traitement d'image par reconnaissance de forme.

Le dispositif de micro-localisation 100 convient pour être fixé sur un échantillon solide par collage ou bien pour être rendu solidaire d'un porte-échantillon ou intégré au porte-échantillon, ou à une lame ou lamelle de microscope ou encore solidaire d'une platine de translation du porte-échantillon. Il est important que le dispositif de microlocalisation 100 reste rigidement solidaire de l'échantillon à observer pendant toute la durée temporelle d'utilisation.

Par exemple, les zones 1, 2, 3, 5, 6, 7 sont remplie de cellules élémentaires telles que décrites précédemment tandis que les zones 4 et 8 sont spatialement uniformes. Chaque zone 1, 2, 3, 5, 6, 7 est constituée d'une cellule élémentaire ou d'un pavage d'une pluralité de cellules élémentaires. A l'intérieur d'une même zone, les cellules élémentaires présentent toutes la même superficie et la même dimension de motif élémentaire, cependant, les cellules élémentaires de deux zones adjacentes présentent des dimensions différentes en termes de superficie et de taille de motif élémentaire.

Ainsi, dans un exemple de réalisation, chaque zone 1, 2, 3, 5, 6, 7 comporte des cellules élémentaires de taille différente, par exemple :

**Tableau I : Exemple de dimensions et nombres de cellules élémentaires associées à différentes zones d'un dispositif de micro-localisation illustré en figure 3 et instruments de mesure adaptés à chaque zone**

| Numéro de zone | Surface élémentaire (microns²) | Nombre de cellules élémentaires | Dimension de la plus petite case (microns) | Instrument correspondant |
|---|---|---|---|---|
| 1 | 100 | 100*100 | 0,5 | AFM, MEB |
| 2 | 400 | 50*50 | 1 | Microscope optique 100X |
| 3 | 1600 | 25*25 | 2 | Microscope optique 50X |
| 5 | 40000 | 5*5 | 10 | Microscope optique 10X |
| 6 | 250000 | 2*2 | 25 | Micro-FTIR |
| 7 | 1000000 | 1 | 50 | Macroscope |

Sur la figure 3, le dispositif de micro-localisation 100 vu dans son ensemble à l'œil nu ou avec un dispositif d'imagerie optique à faible grossissement se présente en forme d'une lettre « F » et est donc asymétrique par construction. Le coin supérieur gauche de la zone 1 est considéré comme origine du système de coordonnées (0, 11X, 11Y) de ce dispositif de micro-localisation 100.

Plus précisément, la zone 1 comporte selon l'exemple du tableau I un pavage de 100*100 cellules élémentaires 11 (voir tableau I). Chaque cellule élémentaire 11 est un carré de dimension 10 microns * 10 microns ayant une surface élémentaire de 100 microns². Les cellules élémentaires 11 de la zone 1 sont disposées pour former un pavage compact, de préférence en 100 lignes et 100 colonnes. La figure 4A représente une cellule élémentaire 11 comportant quatre sous-cellules : la sous-cellule 111 (en haut à gauche), la sous-cellule 112 (en haut à droite), la sous-cellule 113 (en bas à gauche) et la sous-cellule 114 (en bas à droite). Dans l'exemple représenté en figures 3 et 4A, la zone 1 est carrée et chaque cellule élémentaire 11 et chaque sous-cellule sont aussi de forme carrée. La sous-cellule 111 comprend un motif codant de position 1112 et un motif d'orientation 1111, par exemple de forme géométrique ou alphanumérique, ici, en forme de L inversé. La sous-cellule 114 comprend un motif d'identification. Les sous-cellules 112 et 113 comprennent le même motif périodique 110 constitué d'un damier de cases noires 1101 et de cases blanches 1102. Ici, les cases élémentaires noires et blanches, de mêmes dimensions, sont disposées en damier, chaque case élémentaire 1101, 1102 étant un carré de 0,5 micromètre (ou micron) de côté suivant chacun des axes 11X et 11Y. Le pavage de 10*10 cellules élémentaires 11 ainsi formées recouvre toute la surface de la zone 1, c'est-à-dire une surface totale de 1 mm*1 mm. Comme indiqué dans le tableau I, cette zone 1 est particulièrement appropriée à l'analyse par un microscope à sonde locale, par exemple de type microscope à force atomique ou AFM, ou par un microscope électronique à balayage ou MEB, qui conviennent pour former l'image d'une cellule élémentaire de 10 microns de côté tout en résolvant spatialement le motif périodique 110 ayant une dimension minimum de 0.5 micron.

Comme décrit ci-dessus, la zone 1 permet ainsi le positionnement et l'orientation d'un microscope à force atomique ou d'un microscope électronique à balayage avec une précision de positionnement de l'ordre du nanomètre dans le système de coordonnées (O, 11X, 11Y).

La zone 2 est adjacente à la zone 1 et se situe par construction dans le même système de coordonnées que la zone 1. La zone 2 comporte selon l'exemple du tableau I un pavage de 50*50 cellules élémentaires (voir tableau I). Chaque cellule élémentaire de la zone 2 est un carré de dimension 20 microns * 20 microns, ayant une surface élémentaire de 400 microns². Les cellules élémentaires 21, 22, 23, 24 de la zone 2 sont disposées pour former un pavage compact, de préférence en 20 lignes et 20 colonnes. La figure 4B représente un exemple de pavage de quatre cellules élémentaires 21, 22, 23, 24. De manière analogue à la cellule 11 de la figure 4A, chaque cellule élémentaire 21, 22, 23, 24 comporte quatre sous-cellules. Dans cet exemple représenté, la zone 2 est carrée et chaque cellule et sous-cellule est aussi de forme carrée. La cellule élémentaire 21, respectivement 22, 23, 24 comporte un motif codant de position 2112, respectivement 2212, 2312, 2412. Chaque cellule élémentaire 21, 22, 23, 24 comprend un même motif d'orientation 2111, ici, en forme de L. Chaque cellule élémentaire 21, 22, 23, 24 comprend un motif d'identification 214, 224, 234 et 244. De façon avantageuse, les motifs d'identification 214, 224, 234 et 244 sont identiques pour toutes les cellules élémentaires 21, 22, 23, 24 de la même zone 2. De préférence, le motif d'identification est différent d'une zone à une autre zone du même dispositif 100. Alternativement, les motifs d'identification peuvent être identiques pour l'ensemble des zones d'un même dispositif de micro-localisation 100. L'identification de chaque zone peut dans ce cas être encodée dans le motif de position de chaque cellule élémentaire.

Chaque cellule élémentaire 21, 22, 23, 24 comprend aussi un deuxième motif périodique 210 constitué d'un damier de cases noires et de cases blanches. Ici, chaque motif périodique 210 comporte des cases noires et blanches de même dimension, chaque case noire ou blanche étant un carré de 1 micron de côté. Le motif périodique 210 est ici aussi un motif périodique suivant chacun des axes 11X et 11Y, avec une période spatiale de 2 microns. Le pavage de 50*50 cellules élémentaires ainsi formées recouvre toute la surface de la zone 2, c'est-à-dire une surface totale de 1 mm*1 mm. Cette zone 2 est particulièrement appropriée, comme indiqué dans le tableau I, à l'analyse par un microscope optique ayant un grossissement de 100X, qui convient pour former l'image d'une cellule élémentaire de 20 microns de côté tout en résolvant spatialement le motif périodique 110 ayant une dimension minimum de 1 micron.

Ainsi, la zone 2 permet ainsi le positionnement et l'orientation d'un microscope optique avec un grossissement de 100X avec une précision de positionnement sub-micrométrique dans le système de coordonnées (O, 11X, 11Y).

De manière analogue, la zone 3, respectivement la zone 5 et la zone 6, est constituée d'un pavage de 25*25, respectivement 5*5 et 2*2 cellules élémentaires. Chaque cellule élémentaire de la zone 3, respectivement de la zone 5 et de la zone 6, a une dimension de 40 microns*40 microns, respectivement de 200 microns*200 microns et de 500 microns*500 microns. Chaque cellule élémentaire de la zone 3, respectivement de la zone 5 et de la zone 6, a une surface de 1600 microns², respectivement de 40000 microns² et de 250000 microns². Le pavage de cellules élémentaires recouvre toute la surface de la zone 3, respectivement de la zone 5 et de la zone 6, c'est-à-dire une surface totale de 1 mm*1 mm. Les cellules élémentaires de la zone 3, de la zone 5 et de la zone 6 sont formées de manière analogue aux cellules élémentaires de la zone 1 ou de la zone 2 décrites ci-dessus. Toutes les cellules de la zone 3, de la zone 5 et de la zone 6 comportent un motif de position, un motif d'orientation, un motif d'identification et un motif périodique. Le motif périodique des cellules élémentaires de la zone 3, zone 5, et zone 6, est ici aussi un motif périodique suivant chacun des axes 11X et 11Y. La période spatiale du motif périodique de la zone 3 est de 4 microns, chaque case noire ou blanche étant un carré de 2 micromètres de côté. Le motif périodique de la zone 5 a une période spatiale de 20 microns, chaque case noire ou blanche étant un carré de 10 micromètres de côté. Le motif périodique des cellules élémentaires de la zone 6 a une période spatiale de 50 microns, chaque case noire ou blanche étant un carré de 25 micromètres de côté.

La zone 3 est particulièrement appropriée, comme indiqué dans le tableau I, à l'analyse par un microscope optique ayant un grossissement de 50X, qui convient pour former l'image d'une cellule élémentaire de 40 microns de côté tout en résolvant spatialement le motif périodique dont les cases ont une dimension de 2 microns. Ainsi, la zone 3 permet le positionnement et l'orientation d'un microscope optique avec un grossissement de 50X avec une précision de positionnement micrométrique ou sub-micrométrique dans le système de coordonnées (O, 11X, 11Y).

La zone 5 est particulièrement appropriée à l'analyse par un microscope optique ayant un grossissement de 10X, qui convient pour former l'image d'une cellule élémentaire de 200 microns de côté tout en résolvant spatialement le motif périodique dont les cases ont une dimension de 10 microns. Ainsi, la zone 5 permet le positionnement et l'orientation d'un microscope optique avec un grossissement de 10X avec une précision de positionnement micrométrique ou sub-micrométrique dans le système de coordonnées (O, 11X, 11Y).

La zone 6 est particulièrement appropriée à l'analyse par un appareil de micro-spectrométrie infrarouge, ou micro-FTIR, qui convient pour analyser une cellule élémentaire de 500 microns de côté tout en résolvant spatialement le motif périodique dont les cases ont une dimension de 25 microns. Ainsi, la zone 6 permet le positionnement et l'orientation d'un micro-spectromètre infrarouge avec une précision de positionnement micrométrique dans le système de coordonnées (O, 11X, 11Y).

La zone 7 comporte par exemple une seule cellule élémentaire ayant une dimension de 1000 microns * 1000 microns et une surface de 1 mm². La cellule élémentaire de la zone 7 comporte un motif de position, un motif d'orientation, un motif d'identification et un motif périodique. Le motif périodique de la cellule élémentaire de la zone 7 est ici aussi un motif périodique suivant chacun des axes 11X et 11Y, avec une période spatiale de 100 microns, chaque case noire ou blanche étant un carré de 50 micromètres de côté. La zone 7 est particulièrement appropriée à l'analyse par un appareil de type macroscope qui convient pour analyser une cellule élémentaire de 1 mm de côté tout en résolvant spatialement le motif périodique dont les cases ont une dimension de 50 microns. Ainsi, la zone 7 permet le positionnement et l'orientation d'un micro-spectromètre infrarouge avec une précision de positionnement de l'ordre d'une dizaine de microns dans le système de coordonnées (O, 11X, 11Y).

Le dispositif de micro-localisation 100 constitué des zones 1, 2, 3, 5, 6, 7 forme ainsi un dispositif de localisation multi-échelle se rapportant à un seul et même système de coordonnées (O, 11X, 11Y) tout en étant très compact. Le dispositif de microlocalisation 100 offre une grande dynamique d'échelle de positionnement et permet une précision de positionnement dans une gamme s'étendant d'une précision submillimétrique à une précision nanométrique. Le dispositif de micro-localisation 100 permet un positionnement au moyen de systèmes d'imagerie ayant un grossissement pouvant varier de plusieurs ordres de grandeur.

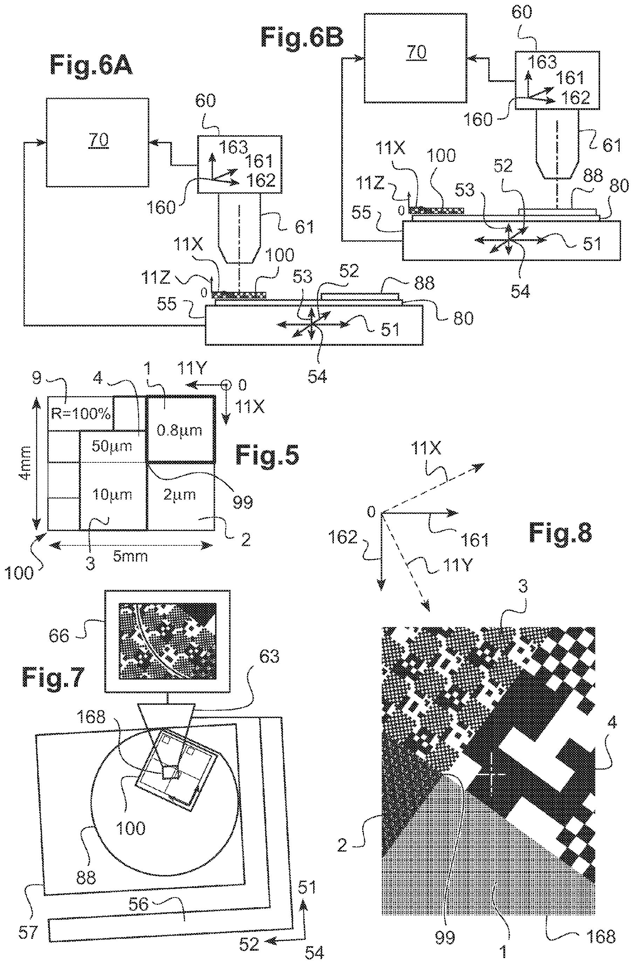

La figure 5 illustre un autre exemple de dispositif de micro-localisation 100. Sur la figure 5, le dispositif de micro-localisation 100 comporte quatre zones 1, 2, 3, 4 microstructurées et une autre zone 9 uniforme. La zone 9 est de préférence une zone métallisée ayant un coefficient de réflexion optique proche de 100%.

On observe que les zones 1, 2 et 3 sont de forme carrée et de même surface (2 mm*2 mm). La zone 4 est en forme de L, formée de trois sous-cellules de 1 mm*1 mm et s'étend sur une surface de 3 mm². Cette zone 4 comporte aussi un motif de position, un motif d'orientation et un motif périodique. Le dispositif de micro-localisation 100 occupe une surface rectangulaire de 4 mm de large sur 5 mm de long. Les quatre zones sont adjacentes autour d'un point de jonction 99.

Le tableau II résume les principales caractéristiques de chaque zone 1, 2, 3, 4.

**Tableau II : autre exemple de dispositif de micro-localisation illustré en figure 5**

| Numéro de zone | Surface élémentaire (microns²) | Nombre de cellules élémentaires | Dimension de la plus petite case (micron) |
|---|---|---|---|
| 1 | 256 | 125*125 | 0.8 |
| 2 | 1600 | 50*50 | 2 |
| 3 | 40000 | 10*10 | 10 |
| 4 | 1000000 | 3 | 50 |

L'utilisateur peut disposer ce dispositif de micro-localisation 100 sur un échantillon ou sur un porte-échantillon, par exemple par collage ou moulage, en dehors de la zone d'intérêt à analyser sur l'échantillon. Avec un instrument imageur, l'utilisateur recherche une zone du dispositif de micro-localisation 100 dans laquelle le grossissement de son instrument permet une lecture automatique des motifs du dispositif de microlocalisation 100, en particulier de sa position et de son orientation.

La figure 6A représente schématiquement une vue de côté d'un appareil de mesure comprenant un instrument imageur 60, un porte-échantillon 80, une platine de déplacement 55 et une unité de contrôle 70. Un échantillon 88 est disposé sur le porte-échantillon 80. Un dispositif de micro-localisation 100 est ici fixé sur le porte-échantillon 80, en dehors de l'échantillon 88. L'instrument imageur 60 comprend, par exemple, un objectif de microscope 61. Sur la figure 6A, le porte-échantillon est disposé de manière à ce que l'instrument imageur 60 forme une image du dispositif de microlocalisation 100. L'unité de contrôle 70 permet de déduire de cette image une fonction de transfert entre le système de coordonnées spatiales (O, 11X, 11Y, 11Z) du dispositif de micro-localisation 100 et le repère orthonormé (160, 161, 162, 163) de l'instrument imageur 60. De préférence, l'unité de contrôle 70 commande à une platine de translation 55 un ou plusieurs petits déplacements du porte-échantillon, tout en conservant le dispositif de micro-localisation 100 dans le champ de vision de l'instrument imageur 60. On acquiert une ou plusieurs images du dispositif de micro-localisation suite à ce(s) déplacement(s) du porte-échantillon. Connaissant la direction et l'amplitude du déplacement effectué, le système de traitement permet d'en déduire une fonction de transfert entre le système de coordonnées lié aux axes de translation (54, 51, 52, 53) de la platine de translation 55 et le système de coordonnées spatiales (O, 11X, 11Y, 11Z) du dispositif de microlocalisation 100.

Sur la figure 6B, l'unité de contrôle 70 commande à la platine de translation 55 un déplacement du porte-échantillon de manière à ce que l'échantillon 88 à mesurer se trouve dans le champ de vision de l'instrument imageur 60. On acquiert une ou plusieurs images de l'échantillon. Connaissant les fonctions de transfert entre les systèmes de coordonnées respectifs de l'instrument imageur, de la platine et du dispositif de microlocalisation, le système de traitement permet ainsi de déterminer très précisément la position de l'instrument imageur sur l'échantillon par rapport au système de coordonnées spatiales (O, 11X, 11Y, 11Z) du dispositif de micro-localisation 100.

La figure 7 représente schématiquement en vue de dessus l'appareil de la figure 6A et fait en outre apparaitre un écran de visualisation 66 de l'instrument imageur 60. La platine de déplacement 55 comporte un chariot 57 mobile et un statif 56 qui est solidaire de l'instrument imageur 60. Le chariot 57 permet de déplacer le porte-échantillon 80 relativement à l'instrument imageur 60. Le chariot est par exemple monté mobile en translation suivant les axes d'un repère orthonormé (54, 51, 52, 53). Le chariot est de préférence motorisé et comporte des capteurs de position dans le repère orthonormé (54, 51, 52, 53). Le chariot 57 motorisé est commandée par une unité de contrôle 70 qui reçoit également les informations des capteurs de position.

L'échantillon 88 est disposé sur le charriot 57. Un dispositif de micro-localisation 100 est ici fixé sur l'échantillon. L'instrument imageur 60 forme une image du champ de vision 168. Cette image apparait sur l'écran de visualisation 66.

Les déplacements du chariot 57 sont repérés dans le système de coordonnées de la platine suivant les trois axes transverses 51, 52, 53. Toutefois, les valeurs repérées peuvent comporter des erreurs venant de la précision des capteurs et de la conception mécanique du système de déplacement. Comme indiqué ci-dessus, le dispositif de microlocalisation 100 comprend son propre système de coordonnées (0, 11X, 11Y, 11Z). Enfin, l'unité de contrôle 70 reçoit les mesures acquises par l'instrument imageur 60. Elle comporte aussi un système de traitement d'image pour traiter les images du dispositif de micro-localisation 100.

On effectue une première mesure de position d'un premier point du dispositif de micro-localisation, puis on applique un déplacement d'une quantité prédéterminée au chariot et on effectue une deuxième mesure de position d'un deuxième point du dispositif de micro-localisation.

A partir de ces mesures, l'unité de contrôle 70 permet premièrement de calibrer la matrice de transfert entre le repère orthonormé (160, 161, 162, 163) de l'instrument imageur et le système de coordonnées (0, 11X, 11Y, 11Z) du dispositif de microlocalisation 100. Deuxièmement, l'unité de contrôle 70 permet de calibrer la matrice de transfert entre le repère orthonormé (54, 51, 52, 53) de la platine 55 et le système de coordonnées (0, 11X, 11Y, 11Z) du dispositif de micro-localisation 100. L'unité de contrôle 70 permet ainsi d'obtenir des mesures, par exemple de microscopie ou de micro-spectrométrie, en fonction d'un déplacement relatif entre le chariot 57 supportant l'échantillon 88 et l'instrument imageur 60, ces mesures étant repérées de manière absolue et extrêmement précise dans le repère du dispositif de micro-localisation 100, qui est lié à l'échantillon 88.

Le système représenté sur les figures 6A-6B permet d'obtenir des mesures de microscopie ou de micro-spectrométrie repérées très précisément dans le système de coordonnées (0, 11X, 11Y, 11Z) du dispositif de micro-localisation. L'homme du métier adaptera sans difficulté particulière, le dispositif de micro-localisation à un instrument de microscopie ou de micro-spectrométrie à balayage de faisceau par rapport à un échantillon, pour obtenir des images repérées dans un système de coordonnées d'un dispositif de micro-localisation lié à l'échantillon.

Sur la figure 8, on a représenté un agrandissement de l'image du dispositif de micro-localisation décrit en lien avec la figure 5 vu au travers d'un système d'imagerie ou d'un instrument de mesure tel que représenté sur les figures 6A et 6B. L'utilisateur prépositionne le centre 160 de l'instrument imageur au voisinage du point de jonction 99 des quatre zones 1, 2, 3, 4 du dispositif de micro-localisation 100. L'instrument imageur a un champ de vision 168 qui est ici rectangulaire. La précision de ce prépositionnement est de l'ordre de 0.1 mm à 1 mm pour permettre de faire l'image du point de jonction 99 dans le champ de vision. L'image capture ainsi au moins une partie de chacune des quatre zones 1 à 4. Cependant, on observe que le champ de vision de l'instrument imageur ne capte qu'une partie d'une cellule élémentaire de la zone 4. Le système de traitement d'image ne permet pas d'analyser l'image de la zone 4 dont la cellule élémentaire est trop grande. D'autre part, l'image des cellules élémentaires des zones 1 et 2 est trop petite et donc trop mal résolue et ne permet pas de distinguer les motifs des cellules élémentaires pour permettre de déterminer la position et l'orientation d'une cellule élémentaire de ces zones 1 et 2. Par contre, l'image de la cellule élémentaire de la zone 3 qui est adjacente au point de jonction 99 entre entièrement dans le champ de vision de l'instrument imageur et le système de traitement d'image résout parfaitement le motif périodique de cette cellule élémentaire de la zone 3. Le système de traitement d'image est avantageusement configuré pour détecter automatiquement, par exemple par reconnaissance de forme, une cellule élémentaire de la zone 3 et pour en extraire la position et l'orientation du système de coordonnées (160, 161, 162) de l'instrument imageur par rapport au système de coordonnées (0, 11X, 11Y) du dispositif de micro-localisation 100.

Après avoir repéré la position du point de jonction 99 dans le repère du système d"imagerie, l'utilisateur effectue ensuite un petit déplacement du charriot dans le repère de la platine de déplacement. Il peut au moyen du système de traitement d'image mesurer précisément le déplacement induit sur l'image et ainsi en déduire une matrice de transfert entre le système de coordonnées de la platine et le système de coordonnées du dispositif de micro-localisation 100.

Le dispositif de micro-localisation 100 présente notamment les avantages suivants par rapport aux dispositifs de l'art antérieur. La recherche de la zone adaptée dans le dispositif de micro-localisation 100 est facilitée par l'étendue de la zone qui n'est pas limitée à la dimension des cellules élémentaires adaptée au grossissement de l'instrument imageur. Un pré-pointage d'une précision submillimétrique suffit pour cibler la zone souhaitée. Le dispositif de micro-localisation 100 supprime l'étape de pré-pointage précis et fastidieux des systèmes antérieurs. Le dispositif de micro-localisation 100 est multimodal, car il est adapté à des instruments de mesure très différents, tels qu'un microscope optique ou un microscope électronique. Le dispositif de micro-localisation 100 est multi-échelle. Il est adapté à des gammes de grossissements très différents. De plus ce dispositif de micro-localisation permet de repérer toutes les positions dans un système de coordonnées unique, ce qui est possible du fait de la définition de l'agencement des différents motifs codés entre eux par construction. Grâce aux motifs périodiques, le dispositif de micro-localisation 100, offre une précision de localisation très largement subpixel. En effet, lorsque les motifs périodiques remplissent environ 50% de l'image, il est possible d'utiliser des techniques de localisation subpixel qui permettent de repérer le centre du motif avec une précision de localisation meilleure que 1/100 de pixel et excéder ainsi la résolution de l'instrument imageur ou du système d'imagerie. En outre, grâce aux motifs périodiques, le dispositif de micro-localisation 100 permet de déterminer l'orientation de l'échantillon avec une précision meilleure que 10⁻⁴ radians. Le dispositif de micro-localisation 100 est peu encombrant et peut être positionné au plus près de la zone d'intérêt d'un échantillon sans obscurcir la zone d'intérêt. Le dispositif de microlocalisation 100 permet une lecture automatique par ordinateur.

Le dispositif de micro-localisation 100 de la présente divulgation comporte un système de coordonnées unique et commun à toutes les zones d'un même dispositif de micro-localisation 100. Les différentes zones ne sont pas simplement juxtaposées mais chaque zone et chaque cellule élémentaire est arrangée de manière connue très précisément. Cette configuration est indispensable pour assurer que la détermination des coordonnées dans le référentiel du dispositif de micro-localisation 100 soit indépendante de l'instrument imageur et du grossissement utilisé. En effet, les opérations de transfert de coordonnées nécessitent la connaissance a priori de l'agencement des zones 1, 2, 3, 4 dans le dispositif de micro-localisation 100.

L'observation du dispositif de micro-localisation 100 permet de déterminer la position et l'orientation de l'instrument imageur utilisé pour la mesure dans un système de coordonnées. De plus, la dimension exacte des motifs périodiques étant connue, le dispositif de micro-localisation 100 permet aussi de mesurer le champ de vue et le grandissement de l'instrument imageur.

L'utilisateur peut aisément calibrer les axes d'une platine de translation du porte-échantillon et/ou de l'instrument de mesure, c'est-à-dire mesurer l'orientation des axes de translation par rapport au système de coordonnées du dispositif de microlocalisation 100. L'utilisateur dispose ainsi d'un transfert de coordonnées entre la platine de translation et l'échantillon qui permet de se déplacer de manière prédéterminée sur l'échantillon. A cet effet, l'utilisateur enregistre par exemple deux images successives du dispositif de micro-localisation 100 en déplaçant la platine de translation suivant une direction connue (par exemple, l'axe X de la platine). A partir des positions du dispositif de micro-localisation fournies par l'analyse de ces images, l'utilisateur et/ou un logiciel adapté en déduit l'orientation de l'axe X recherchée.

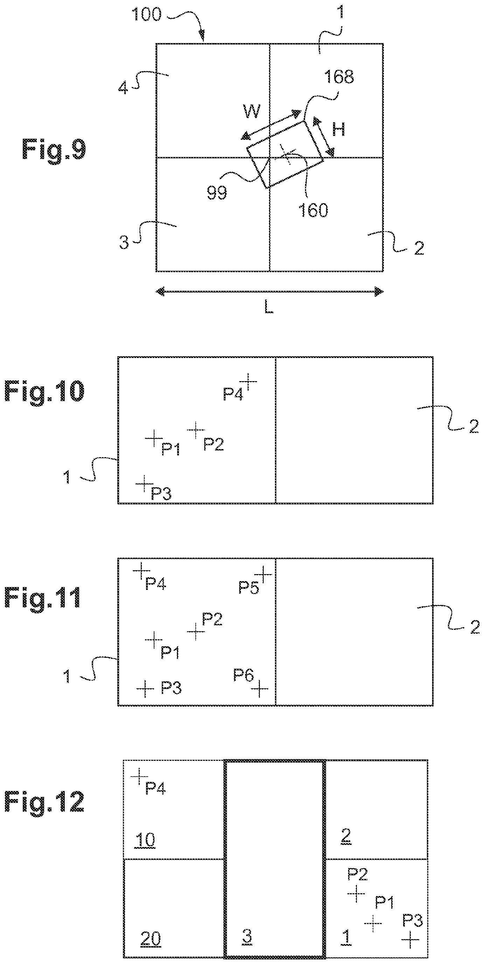

La figure 9 illustre l'utilisation d'un dispositif de micro-localisation selon la présente divulgation.

Sur la figure 9, on a représenté un dispositif de micro-localisation comprenant quatre zones 1, 2, 3, 4 à motifs micro-structurés et leur point de jonction 99, tel que par exemple décrit en lien avec les figures 7 et 8. La surface occupée par chaque zone s'étend à une échelle macroscopique et le point de jonction est généralement visible à l'œil nu. Le point de jonction 99 est avantageusement situé au centre du dispositif de micro-localisation 100 Un instrument imageur forme une image d'un champ de vue 168, de dimensions H x W, où H et W sont déterminés par le grossissement de l'instrument imageur. L'instrument imageur comporte par exemple un détecteur de type caméra CCD à deux dimensions ou un système à balayage de faisceau en deux dimensions et à reconstruction d'image point-par-point. Dans ce cas, il suffit que le centre 160 du champ de vue 168 soit pré-positionnée sur la zone ayant une taille de motifs adaptée, de surface (L/2) x (L/2), où L/2 est la longueur du côté de la zone ayant une taille de motifs adaptée, à condition que celle-ci soit carrée. Dans ce cas en effet, on a toujours une cellule élémentaire de taille adaptée du dispositif de micro-localisation dans le champ de vue 168.

Au contraire, dans un dispositif comprenant différentes marques d'alignement selon l'art antérieur, il est nécessaire de pré-positionner chaque marque d'alignement dans une surface de H x W pour que la marque d'alignement se trouve dans le champ de vue de l'instrument imageur. Or, plus l'instrument imageur a un grossissement élevé, plus le champ de vision est réduit, et plus la différence entre (L/2) x (L/2) et H x W est grande. Les dispositifs à marque d'alignement de l'art antérieur requièrent donc généralement une durée pour réaliser le prépositionnement d'autant plus longue que le grossissement de l'instrument imageur est élevé.

### Procédé

La figure 10 illustre un procédé de détermination d'une position d'observation sur un échantillon, à partir d'un instrument imageur équipé d'une platine de déplacement motorisée et d'un dispositif de micro-localisation 100 multi-échelle tel que décrit ci-dessus.

Le procédé comporte les étapes suivantes ;
a) rendre solidaire l'échantillon à observer d'au moins un dispositif de microlocalisation 100 multi-échelle ;
b) placer l'échantillon à caractériser dans l'instrument imageur à une première position P1, de façon à ce que l'instrument imageur produise une image d'au moins une zone du dispositif de micro-localisation 100, la zone étant adaptée au grossissement de cet instrument ; enregistrer les coordonnées spatiales (Xp1, Yp1) du point P1 dans le repère de la platine de déplacement ; acquérir une première image au moyen de l'instrument imageur ;
c) déterminer, à partir de l'analyse de la première image de ladite partie du dispositif de micro-localisation 100, la position et l'orientation dudit instrument de mesure dans le système de coordonnées du dispositif de micro-localisation 100 multi-échelle ; cette position est repérée par les coordonnées spatiales (Xm1, Ym1) exprimées dans le système de coordonnées du dispositif de micro-localisation 100 et par un angle ALPHA1 entre le système de coordonnées du dispositif de micro-localisation 100 et un axe de l'instrument imageur ; déterminer, à partir de l'analyse d'image et de la connaissance de la taille des motifs observés, le grossissement de l'instrument imageur ;
d) déplacer l'échantillon, ainsi que le dispositif de micro-localisation qui lui est solidaire, au moyen d'une platine de déplacement motorisée et informatisée, vers un point P2 de coordonnées (Xp2, Yp2) dans le repère de la platine ; vérifier que dans cette position l'instrument image toujours une zone de la mire dont le contraste et le grossissement sont adaptées à la lecture automatique de position, sinon, déplacer vers un autre point P2 adéquat ; à partir de l'analyse d'image, déterminer les coordonnées (Xm2, Ym2) repérées dans le système de coordonnées du dispositif de micro-localisation 100 ; à partir des mesures effectuées aux étapes c) et d) déterminer la formule de changement de coordonnées entre le système de coordonnées de la platine et le système de coordonnées du dispositif de micro-localisation 100 ;
e) déplacer l'échantillon, ainsi que le dispositif de micro-localisation qui lui est solidaire, au moyen d'une platine de déplacement motorisée et informatisée, vers un point de mesure localisé P3 sur l'échantillon, repéré par les coordonnées (Xp3, Yp3) dans le système de coordonnées de la platine de déplacement ;
f) déduire, à partir de la formule de changement de coordonnées définie dans d), une position absolue (Xm3, Ym3) du point de mesure localisé P3 dans le système de coordonnées du dispositif de micro-localisation 100 lié audit l'échantillon, de manière à déterminer une caractéristique physique ou chimique de l'échantillon par ledit instrument de mesure en ledit point de mesure localisé.

L'étape c) est une étape de calibration de l'instrument imageur. Dans cette étape c), l'utilisateur place la zone adaptée de la mire de micro-localisation de manière à ce que l'instrument imageur en forme une image, puis en déduise l'orientation l'instrument imageur dans le référentiel de la mire et le grandissement de l'instrument imageur.

L'étape d) est une étape de calibration de la platine de déplacement. L'utilisateur effectue un déplacement connu de l'ensemble échantillon et mire à l'aide de la platine de déplacement, qui est ici motorisée et informatisée, tout en maintenant la mire dans le champ de l'instrument imageur et forme une deuxième image de la mire. On en déduit la fonction de transfert entre le référentiel de la mire et le référentiel de la platine de déplacement.

L'étape d) est une étape de mesure d'un point d'intérêt sur l'échantillon. L'utilisateur effectue un déplacement de l'ensemble échantillon et mire à l'aide de la platine de déplacement et positionne l'échantillon de manière à ce que l'instrument imageur effectue des mesures sur l'échantillon. La platine de déplacement informatisée fournit les coordonnées d'un point d'intérêt sur l'échantillon dans le référentiel de la platine, l'utilisateur en déduit, par changement de référentiel, les coordonnées absolues du point d'intérêt dans le référentiel de la mire.

La figure 10 illustre aussi une variante du procédé de détermination d'une position d'observation sur un échantillon.

On a constaté expérimentalement que l'imprécision de la connaissance du déplacement des platines pouvait être un facteur limitant la précision opérationnelle. Aussi, après avoir appliqué le procédé décrit en lien avec la figure 10, on propose d'augmenter la précision en déplaçant la platine afin de faire pointer l'instrument imageur vers différents points P1, P2, P3, P4 du dispositif de micro-localisation 100 et d'effectuer des mesures de position supplémentaires.

La figure 10 représente le trajet initial P1, P2, puis un trajet optimisé P3-P4 pris dans la diagonale de la zone 1, de manière à accroitre la distance entre les points P3 et P4. On observe expérimentalement que ce procédé permet de diminuer l'erreur de détermination de l'angle entre l'axe de la platine et celui de la mire. Avantageusement, le trajet P3-P4 est parcouru plusieurs fois, afin d'éviter les effets d'hystérésis de la platine et de diminuer le bruit des mesures.

La figure 11 représente le trajet initial P1, P2, puis un trajet optimisé P3-P4-P5-P6, qui a la forme d'un carré compris à l'intérieur de la zone 1 tout en ayant une surface la plus grande possible. On observe expérimentalement qu'un tel parcours a tendance à diminuer les erreurs internes à la platine.

La figure 12 représente un dispositif de micro-localisation 100 ayant deux zones 1 et 10 disjointes affectées à la même première période spatiale. Le dispositif de microlocalisation 100 comporte en outre deux autres zones 2 et 20 disjointes affectées à une même deuxième période spatiale, et une zone 3 affectée à une troisième période spatiale. On définit la position d'un point P3 dans la zone 1 et la position d'un point P4 dans la zone 10 de manière à ce que la distance entre les points P3 et P4 soit la plus grande possible. Un tel dispositif de micro-localisation 100 permet de réaliser un trajet P3-P4 dont la distance est proche de la plus grande dimension du dispositif de micro-localisation 100, ce qui est favorable à la précision sur les angles.

### Procédé de repositionnement absolu

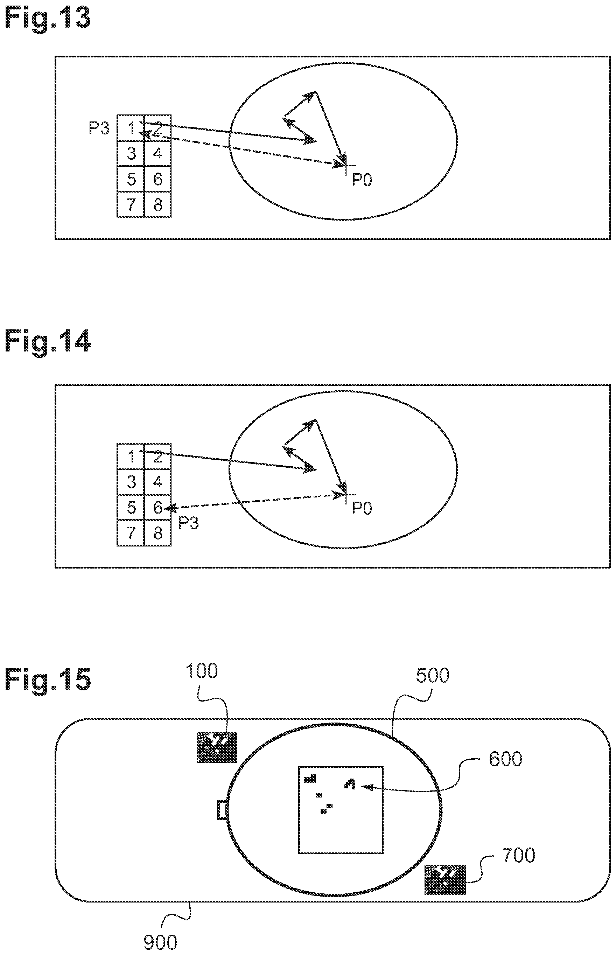

La figure 13 illustre un exemple de procédé de repositionnement.

On détermine une position initiale P3 dans une zone 1 d'un dispositif de microlocalisation 100, suivant la méthode décrite plus haut. On effectue ensuite une série de déplacements, représentés par des flèches sur la figure 13, par exemple pour effectuer des mesures en différentes positions sur l'échantillon. Bien que les déplacements de la platine porte-échantillon soient précisément repérés dans le repère du dispositif de microlocalisation 100, des erreurs de position peuvent apparaître et s'accumuler, par exemple du fait d'imprécisions et de jeu mécanique dans les mouvements du chariot de la platine de déplacement. Pour vérifier ou corriger la position du point P0 sur l'échantillon, il suffit de se déplacer en direction de la position initiale P3. On effectue une nouvelle mesure précise de position dans la zone 1, et on applique, si nécessaire, une correction de position dans le repère du dispositif de micro-localisation, qui reste fixe par rapport à l'échantillon.

Ce dispositif et procédé de réglage trouve des applications notamment en microscopie Raman. Un dispositif de micro-localisation est avantageusement fixé de manière permanente sur la platine porte-échantillon.

### Procédé multi-échelle lors d'un changement de grossissement de l'instrument imageur

Sur les microscopes optiques ou sur les microscopes Raman, il est courant de changer de grossissement en changeant d'objectif de microscope. Le centre de l'observation n'est en général pas conservé, du fait que les objectifs ont un centrage légèrement différent, typiquement de plusieurs dizaines de microns et aussi du fait que le système mécanique de changement d'objectif a une précision et une répétabilité qui n'excède généralement pas 1 micron.

Aussi, un utilisateur qui positionne une zone d'observation autour du point P0 qu'il juge intéressant au centre 160 de son observation, ne voit pas forcément cette même zone lorsqu'il change d'objectif vers un grossissement supérieur.

Pour pallier à cet inconvénient, dès lors qu'il a initialisé le repérage du point P0 dans une première session d'observation à l'aide de la procédure décrite ci-dessus par rapport à un point initial dans la zone 1, l'utilisateur peut changer d'objectif et de grossissement, et lancer la procédure automatique suivante (voir figure 14) :
- donner l'instruction à la platine de déplacer l'échantillon pour amener dans la zone d'observation une zone 6 du dispositif de micro-localisation 100 multi-échelle, la zone 6 étant adaptée au nouveau grossissement. Du fait que la zone 6 en question est de taille significativement supérieure aux quelques dizaines ou centaines de microns d'incertitude de position introduites par le nouvel objectif, il est toujours possible de viser une zone suffisamment loin des bords pour que l'imageur observe bien la zone souhaitée ;
- A partir de l'image obtenue, déterminer la position du point P3 de la zone 6 dans le repère du dispositif de micro-localisation ;
- En déduire un décalage en position entre les deux objectifs de microscope et adapter en conséquence la formule de passage entre le système de coordonnées de la platine et le système de coordonnées du dispositif de micro-localisation. Eventuellement, on peut améliorer la connaissance du décalage à l'aide de déplacements et de mesures supplémentaires dans la même zone de la mire.
- Donner l'instruction à la platine de déplacer l'échantillon afin d'amener le point P0 au centre du champ de vue de l'instrument imageur, compte tenu du décalage par rapport au centre de la zone imagée par le précédent objectif de microscope.

Dans ce mode de réalisation, on comprend combien les spécificités du dispositif de micro-localisation de la présente divulgation sont importantes. En effet, la zone adaptée à une modalité d'observation est assez grande et généralement plus grande que le champ de vue de l'instrument pour qu'on soit certain de se trouver dans une zone où on peut lire la position malgré l'imprécision de connaissance de la position avec le nouvel objectif de microscope. De plus, les zones correspondant aux différents modes d'observation et différents grossissements sont arrangées les unes par rapport aux autres de manière connue à l'avance et précisément localisées dans le référentiel unique du dispositif de micro-localisation.

Un dispositif de micro-localisation fixé de manière permanente à un appareil de microscopie permet de contrôler le réglage d'objectifs de microscope ayant des grossissements différents. En effet, le décentrage initial entre deux objectifs d'un même appareil étant mesurable au moyen du dispositif de micro-localisation, il est possible de mesurer très précisément les variations de décentrage au cours du temps, dans le repère du dispositif de micro-localisation.

Lorsque l'échantillon est d'une taille importante par rapport au dispositif de micro-localisation, par exemple un échantillon de plus de 5 cm alors que la mire mesure 5 mm pour son grand côté, des erreurs même minimes sur la détermination de l'angle entre la mire et l'axe de la platine peuvent se traduire par des erreurs de positionnement supérieures aux erreurs acceptables. Pour diminuer l'erreur d'orientation et de position, on peut choisir de placer plusieurs mires sur l'échantillon pour effectuer les mesures dans le repère du dispositif de micro-localisation le plus proche du point de mesure.

La figure 15 illustre un porte-échantillon 900 sur lequel sont fixés plusieurs, par exemple ici deux, dispositifs de micro-localisation 100, 700. Ce porte-échantillon 900 comporte, par exemple, une lame de microscope sur laquelle sont collées des étiquettes portant chacune un dispositif de micro-localisation 100, 700. On place sur ce porte-échantillon un insert 500, par exemple en inox poli pour un microscope Raman, ou en verre ou quartz ou encore un filtre pour un autre type de microscope optique ou à faisceau de particules ou à sonde locale. L'insert 500 peut être fixé temporairement sur le porte-échantillon 900, au moyen d'une colle, cire solide à température ambiante et liquide à chaud ou tout autre moyen de fixation temporaire.

Contrairement aux dispositifs antérieurs, il n'est pas nécessaire disposer d'au moins trois marques de positionnement éloignées les unes des autres et dont les positions sont connues précisément pour former un repère. Chaque dispositif de microlocalisation 100, 700 porte ici son propre repère.

La calibration consiste à effectuer les opérations du procédé décrit ci-dessus sur l'un des dispositif de micro-localisation 100 puis à se positionner au dessus d'un autre dispositif de micro-localisation 700, dans une zone adaptée à la modalité d'observation ; d'en déduire, à l'aide d'une acquisition d'image, la position d'un point de l'autre mire 700 dans le référentiel de la platine, ainsi que son orientation ; éventuellement, de répéter ces opérations afin de diminuer l'incertitude des mesures. Ensuite, les opérations de recalage décrites ci-dessus peuvent être appliquées en allant se positionner successivement sur plusieurs dispositifs de micro-localisation.

Le dispositif de micro-localisation est également adapté à des observations colocalisées à l'aide de plusieurs instruments. Pour co-localiser des observations avec plusieurs instruments, on utilise les procédures indiquées ci-dessus pour chaque instrument. Du fait que les différentes zones du dispositif de micro-localisation 100 ont des coordonnées qui sont connues dans le référentiel unique et global de l'ensemble de dispositif de micro-localisation 100, indépendamment de la zone où est faite la mesure, les coordonnées déterminées dans le plan du dispositif de micro-localisation 100 sont indépendantes de la zone dont on s'est servi pour déterminer la position initiale.

Par exemple, on peut ainsi réaliser la mise en coïncidence d'un microscope à force atomique et d'un microscope optique. Réaliser l'alignement des deux types de microscopes peut se faire avantageusement avec un dispositif de micro-localisation 100 tel que décrit ci-dessus.

Pour connaître précisément les déplacements effectués par une platine, il est utile de disposer d'une information d'un capteur de position. De nombreuses platines disposent d'un capteur de position. Alternativement, cette information peut être obtenue au moyen d'un dispositif de micro-localisation combiné à un microscope optique d'observation. A cet effet, une zone adaptée à une lecture optique avec le grossissement considéré du microscope optique et s'étendant sur une surface correspondant à la course de la platine de déplacement est rendue solidaire soit de la platine, soit de l'échantillon, le microscope optique d'observation étant rendu solidaire de l'instrument de mesure.

Certains instruments comportent plusieurs modalités d'observation intégrées. Le dispositif de micro-localisation de la présente divulgation permet la mise en coïncidence de plusieurs grossissements et/ou modalités au moyen d'un système imageur.

Par exemple, un microscope Raman peut être configuré pour permettre d'une part l'observation plein champ à l'aide d'une caméra et d'objectifs présentant différents grossissements et, d'autre part, l'observation en mode confocal, obtenu par balayage d'un spot laser sur la surface de l'échantillon. Il est important de pouvoir faire coïncider très exactement les mesures faites par les différents modes de fonctionnement de l'appareil (au niveau du centrage, de l'orientation, de l'échelle) afin de pouvoir superposer les images obtenues dans les différents modes de fonctionnement, sans induire des décalages en position et/ou en orientation susceptibles d'être préjudiciables à l'analyse des images. En microscopie Raman, dont la résolution spatiale peut être aussi bonne que 200 nm, on souhaite réaliser la coïncidence des différents modes de fonctionnement à mieux que 200 nm. Or, il est difficile de déterminer avec une telle précision la coïncidence des observations.

Le procédé pour y parvenir repose sur un dispositif de micro-localisation 100 tel que décrit ci-dessus, qui présente des zones adaptées aux différents modes de fonctionnement et grossissements. Certaines zones du dispositif de micro-localisation 100 peuvent convenir à plusieurs modes de fonctionnement.

Pour cela, les étapes du procédé de mise en coïncidence sont les suivantes :
- Positionner un dispositif de micro-localisation dans une première position P1 de façon à observer une zone adaptée à travers un système imageur correspondant à un mode de fonctionnement et un grossissement du microscope Raman ;
- Acquérir l'image dans ce mode de fonctionnement, en déduire les coordonnées (Xm1, Ym1) dans le référentiel du dispositif de micro-localisation, l'orientation de ce mode de fonctionnement par rapport au dispositif de micro-localisation et la dimension d'une cellule élémentaire dans l'unité qui sert à définir la taille de l'image, par exemple en pixels ;
- Changer de mode de fonctionnement ; si la même zone du dispositif de micro-localisation convient au nouveau mode de fonctionnement, acquérir une image et en déduire les coordonnées (Xm2, Ym2) dans le référentiel du dispositif de microlocalisation, l'orientation de ce nouveau mode de fonctionnement par rapport au dispositif de micro-localisation et la taille d'un motif élémentaire dans l'unité qui sert à définir la taille de l'image ;
- Le décalage entre les deux modes de fonctionnement de l'instrument imageur est donné par le vecteur P1P2, avec les coordonnées (Xm2 - Xm1, Ym2 - Ym1) dans le référentiel du dispositif de micro-localisation. On détermine aussi les différences d'orientation entre les deux modes de fonctionnement, ainsi que la taille d'un motif élémentaire pour chaque mode (par exemple en fonction de la taille d'un pixel de la caméra pour la microscopie optique à champ large ou en fonction du pas de balayage dans un micro-spectromètre Raman à balayage).

Dans le cas où, lorsqu'on change de mode de fonctionnement, il est nécessaire de changer de zone du dispositif de micro-localisation, on effectue un déplacement d'une valeur connue, qui compte tenu de la connaissance de la position initiale, amène la zone adéquate du dispositif de micro-localisation dans le champ d'observation. Notons V ce vecteur de déplacement. On acquiert une nouvelle image d'une autre zone du dispositif de micro-localisation, et on en déduit la nouvelle position P2 du dispositif de microlocalisation, son orientation par rapport à l'instrument imageur et la taille d'une cellule élémentaire dans l'unité qui sert à définir la taille de l'image. Le décalage entre les deux modes de fonctionnement est alors donné par le vecteur P1P2-V. Le rapport des grossissements est égal au rapport des tailles des cellules élémentaires, dans les unités qui définissent la taille de l'image, divisé par le rapport des tailles réelles des cellules élémentaires.

Au besoin, la correspondance entre les coordonnées du vecteur V dans le référentiel de la platine de déplacement (Vxp, Vyp) et dans celui du dispositif de microlocalisation (Vxm, Vym) peut être déterminée en effectuant, par exemple à partir de la position P1, un déplacement connu de (Xp0, Yp0) de la platine de déplacement qui maintient le champ d'observation dans la même zone du dispositif de micro-localisation et en déterminant les coordonnées (Xm3, Ym3) de la nouvelle position P3 dans le référentiel du dispositif de micro-localisation. La formule de transformation de coordonnées est obtenue à partir de Xm1, Ym1, Xm3, Ym3, Xp0, Yp0.

Afin de réaliser régulièrement et automatiquement le recalage entre plusieurs modes de fonctionnement et/ou grossissements, il est ici considéré de rendre le dispositif de micro-localisation solidaire de la platine du porte-échantillon du microscope, préférentiellement sur un bord ou un coin de la zone que la platine permet d'amener dans la zone d'observation. Un avantage de dispositif de micro-localisation selon la présente divulgation comparé aux dispositifs à marque d'alignement macroscopique est que le système imageur s'accommode d'un pré-positionnement imprécis.

A titre d'exemple, un dispositif de micro-localisation fabriqué sur un substrat de silicium et comportant une zone de 2 mm de côté présentant des motifs métalliques, par exemple en or ou en chrome, d'épaisseur comprise entre 20 nm et 150 nm, dont la demi-période spatiale de motif périodique est de 2 microns et la cellule élémentaire est de 40 microns de côté, est bien adapté à la calibration à la fois du système imageur avec un objectif 100X et de l'observation Raman. Une autre zone de 2 mm de côté, présentant des motifs de même nature, dont la demi-période spatiale de motif périodique est de 10 microns et la cellule élémentaire est de 200 microns de côté, permet de mettre en coïncidence un objectif 10X du même microscope avec le mode de fonctionnement 100X.

## Revendications

1. Dispositif de micro-localisation (100) pour instrument imageur (60, 61), le dispositif de micro-localisation (100) définissant un système de coordonnées spatiales (O, 11X, 11Y) et étant adapté à être rendu solidaire d'un échantillon ou d'un porte-échantillon, le dispositif de micro-localisation (100) comporte au moins une première zone (1) s'étendant spatialement sur une première surface de dimensions macroscopiques, ladite première zone (1) ayant une position et une orientation prédéterminée dans le système de coordonnées spatiales (O, 11X, 11Y) du dispositif de micro-localisation, ladite première zone (1) comprenant une cellule élémentaire (11) ou un pavage de plusieurs cellules élémentaires (21, 22, 23, 24) s'étendant sur la première surface de ladite première zone (1), chaque cellule élémentaire (11) de la première zone (1) s'étendant sur une première surface élémentaire, la première surface élémentaire s'étendant dans une gamme de dimension allant du sub-micrométrique au macroscopique, chaque cellule élémentaire (11) de la première zone (1) comportant un premier motif spatial périodique (110) associé à une première période spatiale fonction de la première surface élémentaire, et, chaque cellule élémentaire (11, 21, 22, 23, 24) de ladite première zone (1) comprenant en outre un motif d'orientation (1111, 2111) et un motif de positionnement (1112, 2112, 2212, 2312, 2412) dans le système de coordonnées spatiales (O, 11X, 11Y) du dispositif de micro-localisation, et
**caractérisé en ce que** le dispositif de micro-localisation (100) comporte une deuxième zone (2) adjacente à la première zone (1), ladite deuxième zone (2) s'étendant spatialement sur une deuxième surface de dimensions macroscopiques, ladite deuxième zone (2) ayant une position et une orientation prédéterminée dans le système de coordonnées spatiales (O, 11X, 11Y) du dispositif de micro-localisation, ladite deuxième zone (2) comprenant une cellule élémentaire (11) ou un pavage de plusieurs cellules élémentaires (21, 22, 23, 24) s'étendant sur la deuxième surface de ladite deuxième zone (1, 2), chaque cellule élémentaire (21, 22, 23, 24) de la deuxième zone (2) s'étendant sur une deuxième surface élémentaire différente de la première surface élémentaire, la deuxième surface élémentaire s'étendant dans une gamme de dimension allant du sub-micrométrique au macroscopique, chaque cellule élémentaire (21, 22, 23, 24) de la deuxième zone (2) comportant un deuxième motif spatial périodique (210) associé à une deuxième période spatiale différente de la première période spatiale, fonction de la deuxième surface élémentaire, chaque cellule élémentaire (11, 21, 22, 23, 24) de ladite deuxième zone (2) comprenant en outre un motif d'orientation (1111, 2111) et un motif de positionnement (1112, 2112, 2212, 2312, 2412) dans le système de coordonnées spatiales (O, 11X, 11Y) du dispositif de micro-localisation, au moins une desdites première ou deuxième cellule élémentaire étant adaptée pour que ledit instrument imageur (60, 61) en forme une image et en déduise une position, respectivement, une orientation de ladite image dans le système de coordonnées spatiales du dispositif de micro-localisation (100).

2. Dispositif de micro-localisation (100) selon la revendication 1, dans lequel la première période spatiale est supérieure ou égale au double de la deuxième période spatiale.

3. Dispositif de micro-localisation (100) selon l'une des revendications 1 ou 2, dans lequel le premier motif spatial périodique (110) couvre au moins cinquante pourcents de la surface de chaque cellule élémentaire (11) de la première zone (1), et/ou, respectivement, le deuxième motif spatial périodique (210) couvre au moins cinquante pourcents de la surface de chaque cellule élémentaire (21, 22, 23, 24) de la deuxième zone (2).

4. Dispositif de micro-localisation (100) selon l'une des revendications 1 à 3, dans lequel le premier motif spatial périodique (110) est périodique suivant deux directions transverses avec la même première période spatiale et/ou dans lequel le deuxième motif spatial périodique (210) est périodique suivant deux directions transverses avec la même deuxième période spatiale.

5. Dispositif de micro-localisation (100) selon l'une des revendications 1 à 4, dans lequel le motif d'orientation, le motif de positionnement et le motif spatial périodique sont formés par dépôt et/ou gravure de couche mince métallique.

6. Dispositif de micro-localisation (100) selon l'une des revendications 1 à 5, dans lequel chaque cellule élémentaire est de forme polygonale ayant un côté de longueur égale à un multiple entier compris entre une unité et quelques dizaines de la période spatiale du motif spatial périodique de ladite cellule élémentaire.

7. Dispositif de micro-localisation (100) selon l'une des revendications 1 à 6, comportant en outre au moins une zone disjointe (10) de la première zone (1), chaque cellule élémentaire (11) de la zone disjointe (10) comportant le même premier motif spatial périodique (110) associé à la même première période spatiale,

8. Dispositif de micro-localisation (100) selon l'une des revendications 1 à 7, comportant une pluralité de zones (1, 2, 3, 4, 5, 6, 7, 8) disposées de manière à former un dispositif de micro-localisation (100) de forme asymétrique à une échelle macroscopique.

9. Dispositif de micro-localisation (100) selon l'une des revendications 1 à 8 comportant une pluralité de zones (1, 2, 3, 4), chaque zone (1, 2, 3, 4) de la pluralité de zones (1, 2, 3, 4), s'étendant spatialement sur une surface de dimension macroscopique, chaque zone (1, 2, 3, 4) de la pluralité de zones (1, 2, 3, 4) comprenant une cellule élémentaire (11) ou un pavage de plusieurs cellules élémentaires (21, 22, 23, 24) s'étendant sur la surface respective de ladite zone (1, 2, 3, 4), les zones (1, 2, 3, 4) de ladite pluralité de zones (1, 2, 3, 4) étant disposées autour d'un point de jonction (99) commun à une cellule élémentaire (11, 21) de chacune desdites zones (1, 2, 3, 4), chaque cellule élémentaire de chacune desdites zones (1, 2, 3, 4) autour du point de jonction (99) étant associée de manière biunivoque d'une part à une surface élémentaire et d'autre part à un motif spatial périodique (110, 210) fonction de la surface élémentaire de ladite zone (1, 2, 3, 4).

10. Porte-échantillon pour appareil de microscopie comportant au moins un dispositif de micro-localisation selon l'une des revendications 1 à 9.

11. Appareil de mesure comprenant un instrument imageur (60, 61), un porte-échantillon (88, 900), une unité de contrôle (70) et au moins un dispositif de microlocalisation (100, 700) selon l'une des revendications 1 à 9, le dispositif de microlocalisation (100, 700) étant solidaire d'un échantillon ou du porte-échantillon (88, 900), l'instrument imageur (60, 61) étant configuré pour acquérir une image et l'unité de contrôle (70) étant configurée pour fournir les coordonnées de ladite image dans le système de coordonnées du dispositif de micro-localisation (100, 700).

12. Appareil de mesure selon la revendication 11 comprenant en outre un système de déplacement du porte-échantillon intégrant un dispositif de mesure de déplacement du porte-échantillon dans un système de coordonnées de ce système de déplacement, l'unité de contrôle (70) étant configurée pour commander un déplacement du porte-échantillon dans le système de coordonnées du dispositif de micro-localisation (110).

13. Appareil de mesure selon la revendication 11 dans lequel l'appareil de mesure comprend un dispositif de balayage d'un faisceau incident par rapport à un échantillon, et dans lequel l'unité de contrôle (70) est configurée pour commander un déplacement par balayage du faisceau incident et dans lequel l'unité de contrôle (70) comprend un système de traitement du signal adapté pour reconstruire une image point par point en fonction du balayage de faisceau dans le système de coordonnées du dispositif de micro-localisation (110).

14. Appareil de mesure selon la revendication 11 dans lequel l'appareil de mesure comprend un appareil de microscopie à sonde locale ayant une pointe et un système de déplacement relatif entre ladite pointe et un échantillon à analyser dans lequel l'unité de contrôle (70) comprend un système de traitement du signal adapté pour reconstruire une image point par point en fonction du déplacement par balayage de la sonde locale dans le système de coordonnées du dispositif de micro-localisation (110).

15. Procédé de micro-localisation (100) d'un échantillon comprenant les étapes suivantes :
- solidariser un dispositif de micro-localisation (100) selon l'une des revendications 1 à 9 avec un porte-échantillon ou un échantillon à analyser de manière à définir un système de coordonnées spatiales lié audit échantillon,
- disposer un instrument imageur de manière à former une image d'au moins une cellule élémentaire (11, 21, 22, 23, 24) du dispositif de micro-localisation (100),
- traiter ladite image d'au moins une cellule élémentaire (11, 21, 22, 23, 24), pour en déduire une orientation et une position de ladite image dans le système de coordonnées spatiales du dispositif de micro-localisation (100).

## Patentansprüche

1. Mikrolokalisierungsvorrichtung (100) für ein Bildgebungsinstrument (60, 61), wobei die Mikrolokalisierungsvorrichtung (100) ein räumliches Koordinatensystem (O, 11X, 11Y) definiert und dazu ausgelegt ist, mit einer Probe oder einem Probenträger fest verbunden zu werden, wobei die Mikrolokalisierungsvorrichtung (100) wenigstens eine erste Zone (1), die sich räumlich über eine erste Oberfläche mit makroskopischen Abmessungen erstreckt, wobei die erste Zone (1) im räumlichen Koordinatensystem (O, 11X, 11Y) der Mikrolokalisierungsvorrichtung eine Position und eine vorbestimmte Ausrichtung aufweist, wobei die erste Zone (1) eine Elementarzelle (11) oder einen Belag aus mehreren Elementarzellen (21, 22, 23, 24) aufweist, die sich auf der ersten Oberfläche der ersten Zone (1) erstrecken, wobei sich jede Elementarzelle (11) der ersten Zone (1) über eine erste Elementaroberfläche erstreckt, wobei sich die erste Elementaroberfläche in einem Abmessungsbereich erstreckt, der vom Submikroskopischen bis zum Makroskopischen reicht, wobei jede Elementarzelle (11) der ersten Zone (1) ein erstes periodisches räumliches Motiv (110) aufweist, das einer ersten räumlichen Periode in Abhängigkeit von der ersten Elementaroberfläche zugeordnet ist, und wobei jede Elementarzelle (11, 21, 22, 23, 24) der ersten Zone (1) außerdem im räumlichen Koordinatensystem (O, 11X, 11Y) der Mikrolokalisierungsvorrichtung ein Orientierungsmotiv (1111, 2111) und ein Positionierungsmotiv (1112, 2112, 2212, 2312, 2412) aufweist, und
**dadurch gekennzeichnet, daß** die Mikrolokalisierungsvorrichtung (100) eine an die erste Zone (1) angrenzende zweite Zone (2) aufweist, wobei sich die zweite Zone (2) räumlich über eine zweite Oberfläche mit makroskopischen Abmessungen erstreckt, wobei die zweite Zone (2) im räumlichen Koordinatensystem (O, 11X, 11Y) der Mikrolokalisierungsvorrichtung eine Position und eine vorbestimmte Ausrichtung aufweist, wobei die zweite Zone (2) eine Elementarzelle (11) oder einen Belag aus mehreren Elementarzellen (21, 22, 23, 24) aufweist, die sich auf der zweiten Oberfläche der zweiten Zone (2) erstrecken, wobei sich jede Elementarzelle (21, 22, 23, 24) der zweiten Zone (2) über eine von der ersten Elementaroberfläche verschiedene zweite Elementaroberfläche erstreckt, wobei sich die zweite Elementarobertläche in einem Abmessungsbereich erstreckt, der vom Submikroskopischen bis zum Makroskopischen reicht, wobei jede Elementarzelle (21, 22, 23, 24) der zweiten Zone (2) ein zweites periodisches räumliches Motiv (210) aufweist, das einer von der ersten räumlichen Periode verschiedenen zweiten räumlichen Periode in Abhängigkeit von der zweiten Elementaroberfläche zugeordnet ist, und wobei jede Elementarzelle (11, 21, 22, 23, 24) der zweiten Zone (2) außerdem im räumlichen Koordinatensystem (O, 11X, 11Y) der Mikrolokalisierungsvorrichtung ein Orientierungsmotiv (1111, 2111) und ein Positionierungsmotiv (1112, 2112, 2212, 2312, 2412) aufweist, wobei wenigstens eine der ersten oder zweiten Elementarzelle so ausgelegt ist, daß das Bildgebungsinstrument (60, 61) daraus ein Bild formt und daraus eine Position bzw. eine Orientierung des Bilds im räumlichen Koordinatensystem der Mikrolokalisierungsvorrichtung (100) ableitet.

2. Mikrolokalisierungsvorrichtung (100) gemäß Anspruch 1, bei der die erste räumliche Periode größer als oder gleich dem Doppelten der zweiten räumlichen Periode ist.

3. Mikrolokalisierungsvorrichtung (100) gemäß einem der Ansprüche 1 oder 2, bei der das erste periodische räumliche Motiv (110) wenigstens fünfzig Prozent der Oberfläche jeder Elementarzelle (11) der ersten Zone (1) bedeckt und/oder, entsprechend, das zweite periodische räumliche Motiv (210) wenigstens fünfzig Prozent der Oberfläche jeder Elementarzelle (21, 22, 23, 24) der zweiten Zone (2) bedeckt.

4. Mikrolokalisierungsvorrichtung (100) gemäß einem der Ansprüche 1 bis 3, bei der das erste periodische räumliche Motiv (110) in zwei Querrichtungen mit der gleichen ersten räumlichen Periode periodisch ist und/oder bei der das zweite periodische räumliche Motiv (210) in zwei Querrichtungen mit der gleichen zweiten räumlichen Periode periodisch ist.

5. Mikrolokalisierungsvorrichtung (100) gemäß einem der Ansprüche 1 bis 4, bei der das Orientierungsmotiv, das Positionierungsmotiv und das periodische räumliche Motiv durch Abscheidung und/oder Gravur einer metallischen Dünnschicht gebildet werden.

6. Mikrolokalisierungsvorrichtung (100) gemäß einem der Ansprüche 1 bis 5, bei der jede Elementarzelle von polygonaler Form ist mit einer Seitenlänge, die gleich einem ganzen Mehrfachen zwischen einer Einheit und einigen Zehnfachen der räumlichen Periode des periodischen räumlichen Motivs der Elementarzelle ist.

7. Mikrolokalisierungsvorrichtung (100) gemäß einem der Ansprüche 1 bis 6, die außerdem wenigstens eine von der ersten Zone (1) getrennte Zone (10) aufweist, wobei jede Elementarzelle (11) der getrennten Zone (10) das der gleichen ersten räumlichen Periode zugeordnete gleiche erste periodische räumliche Motiv (110) aufweist.

8. Mikrolokalisierungsvorrichtung (100) gemäß einem der Ansprüche 1 bis 7, die eine Anzahl Zonen (1, 2, 3, 4, 5, 6, 7, 8) aufweist, die so angeordnet sind, daß sie eine Mikrolokalisierungsvorrichtung (100) von asymmetrischer Form bei makroskopischem Maßstab bilden.

9. Mikrolokalisierungsvorrichtung (100) gemäß einem der Ansprüche 1 bis 8, die eine Anzahl Zonen (1, 2, 3, 4) aufweisen, wobei sich jede Zone (1, 2, 3, 4) der Anzahl Zonen (1, 2, 3, 4) räumlich auf einer Oberfläche von makroskopischen Abmessungen erstreckt, wobei jede Zone (1, 2, 3, 4) der Anzahl Zonen (1, 2, 3, 4) eine Elementarzelle (11) oder einen Belag aus mehreren Elementarzellen (21, 22, 23, 24) aufweist, die sich auf der entsprechenden Oberfläche der Zone (1, 2, 3, 4) erstrecken, wobei die Zonen (1, 2, 3, 4) der Anzahl Zonen (1, 2, 3, 4) um einen Verbindungspunkt (99) herum angeordnet sind, der einer Elementarzelle (11,21) jeder der Zonen (1, 2, 3, 4) gemeinsam ist, wobei jede Elementarzelle jeder der Zonen (1, 2, 3, 4) um den Verbindungspunkt (99) herum in eineindeutiger Weise einerseits einer Elementaroberfläche und andererseits einem periodischen räumlichen Motiv (110, 210) in Abhängigkeit von der Elementaroberfläche der Zone (1, 2, 3, 4) geordnet ist.

10. Probenträger für ein Mikroskopiegerät, das wenigstens eine Mikrolokalisierungsvorrichtung gemäß einem der Ansprüche 1 bis 9 aufweist.

11. Meßvorrichtung, die ein Bildgebungsinstrument (60, 61), einen Probenträger (88, 900), eine Steuerungseinheit (70) und wenigstens eine Mikrolokalisierungsvorrichtung (100, 700) gemäß einem der Ansprüche 1 bis 9 aufweist, wobei die Mikrolokalisierungsvorrichtung (100, 700) mit einer Probe oder dem Probenträger (88, 900) fest verbunden ist, wobei das Bildgebungsinstrument (60, 61) dazu ausgelegt ist, ein Bild aufzunehmen, und die Steuerungseinheit (70) dazu ausgelegt ist, die Koordinaten des Bilds im Koordinatensystem der Mikrolokalisierungsvorrichtung (100, 700) zu liefern.

12. Meßvorrichtung gemäß Anspruch 11, die außerdem ein System zum Verlagern des Probenträgers aufweist, die eine Vorrichtung zum Messen der Verlagerung des Probenträgers in einem Koordinatensystem dieses Verlagerungssystems aufweist, wobei die Steuerungseinheit (70) dazu ausgelegt ist, eine Verlagerung des Probenträgers im Koordinatensystem der Mikrolokalisierungsvorrichtung (110) zu steuern.

13. Meßvorrichtung gemäß Anspruch 11, bei der die Meßvorrichtung eine Vorrichtung zum Schwenken eines einfallenden Strahls gegenüber einer Probe aufweist und bei der die Steuerungseinheit (70) dazu ausgelegt ist, eine Verlagerung durch Schwenken des einfallenden Strahls zu steuern, und bei der die Steuerungseinheit (70) ein Signalverarbeitungssystem aufweist, das dazu ausgelegt ist, ein Bild Punkt für Punkt in Abhängigkeit von der Verlagerung des Strahls im Koordinatensystem der Mikrolokalisierungsvorrichtung (110) zu rekonstruieren.

14. Meßvorrichtung gemäß Anspruch 11, bei der die Meßvorrichtung eine Mikroskopievorrichtung mit lokaler Sonde aufweist, die eine Spitze und ein relatives Verlagerungssystem zwischen der Spitze und einer zu analysierenden Probe aufweist, wobei die Steuerungseinheit (70) ein Signalverarbeitungssystem aufweist, das dazu ausgelegt ist, ein Bild Punkt für Punkt in Abhängigkeit von der Verlagerung des Strahls im Koordinatensystem der Mikrolokalisierungsvorrichtung (110) zu rekonstruieren.

15. Verfahren der Mikrolokalisierung (100) einer Probe, das die folgenden Schritte aufweist:
- eine Mikrolokalisierungsvorrichtung (100) gemäß einem der Ansprüche 1 bis 9 mit einem Probenträger oder einer zu analysierenden Probe fest verbinden, um ein mit der Probe verbundenes räumliches Koordinatensystem zu definieren,
- ein Bildgebungsinstrument so aufstellen, daß ein Bild wenigstens einer Elementarzelle (11, 21, 22, 23, 24) der Mikrolokalisierungsvorrichtung (100) gebildet wird,
- das Bild wenigstens einer Elementarzelle (11, 21, 22, 23, 24) verarbeiten, um daraus eine Orientierung und eine Position des Bilds im räumlichen Koordinatensystem der Mikrolokalisierungsvorrichtung (100) abzuleiten.

## Claims

1. Micro-localisation device (100) for imaging instrument (60, 61), the microlocalisation device (100) defining a system of spatial coordinates (O, 11X, 11Y) and being suitable to be secured to a sample or to a sample stage, the micro-localisation device (100) including at least one first zone (1) extending spatially over a first area of macroscopic dimensions, said first zone (1) having a predetermined position and a predetermined orientation in the system of spatial coordinates (O, 11X, 11Y) of the microlocalisation device, said first zone (1) including an elementary cell (11) or a tiling of a plurality of elementary cells (21, 22, 23, 24) extending over the first area of said first zone (1), each elementary cell (11) of the first zone (1) extending over a first elementary area, the first elementary area extending into a size range going from sub-millimetric to macroscopic, each elementary cell (11) of the first zone (1) including a first periodic spatial pattern (110) associated with a first spatial period function of the first elementary area, and, each elementary cell (11, 21, 22, 23, 24) of said first zone (1) further including an orientation pattern (1111, 2111) and a positioning pattern (1112, 2112, 2212, 2312, 2412) in the system of spatial coordinates (O, 11X, 11Y) of the micro-localisation device, and **characterised in that**:
the micro-localisation device (100) includes one second zone (2), adjacent to the first zone (1), said second zone (2) extending spatially over a second area of macroscopic dimensions, said second zone (2) having a predetermined position and a predetermined orientation in the system of spatial coordinates (O, 11X, 11Y) of the micro-localisation device, said second zone (2) including an elementary cell (11) or a tiling of a plurality of elementary cells (21, 22, 23, 24) extending over the second area of said second zone (2), each elementary cell (21, 22, 23, 24) of the second zone (2) extending over a second elementary area different from the first elementary area, the second elementary area extending into a size range going from sub-millimetric to macroscopic, each elementary cell (21, 22, 23, 24) of the second zone (2) including a second periodic spatial pattern (210) associated with a second spatial period, different from the first spatial period, function of the second elementary area, each elementary cell (11, 21, 22, 23, 24) of said second zone (2) further including an orientation pattern (1111, 2111) and a positioning pattern (1112, 2112, 2212, 2312, 2412) in the system of spatial coordinates (O, 11X, 11Y) of the micro-localisation device, at least one of said first or second elementary cells being suitable such that said imaging instrument (60, 61) forms an image thereof and deduces from it a position, respectively, an orientation of said image in the system of spatial coordinates of the micro-localisation device (100).

2. Micro-localisation device (100) according to claim 1, wherein the first spatial period is greater than or equal to double the second spatial period.

3. Micro-localisation device (100) according to one of claims 1 or 2, wherein the first periodic spatial pattern (110) covers at least fifty percent of the area of each elementary cell (11) of the first zone (1), and/or, respectively, the second periodic spatial pattern (210) covers at least fifty percent of the area of each elementary cell (21, 22, 23, 24) of the second zone (2).

4. Micro-localisation device (100) according to one of claims 1 to 3, wherein the first periodic spatial pattern (110) is periodic along two transverse directions with the same first spatial period and/or wherein the second periodic spatial pattern (210) is periodic along two transverse directions with the same second spatial period.

5. Micro-localisation device (100) according to one of claims 1 to 4, wherein the orientation pattern, the positioning pattern and the periodic spatial pattern are formed by depositing and/or engraving a thin, metal layer.

6. Micro-localisation device (100) according to one of claims 1 to 5, wherein each elementary cell is of polygonal shape with sides of length equal to a whole number multiple of between one unit and a few tens of the spatial period of the periodic spatial pattern of said elementary cell.

7. Micro-localisation device (100) according to one of claims 1 to 6, further including at least one zone separated (10) from the first zone (1), each elementary cell (11) of the separated zone (10) including the same first periodic spatial pattern (110) associated with the same first spatial period.

8. Micro-localisation device (100) according to one of claims 1 to 7, including a plurality of zones (1, 2, 3, 4, 5, 6, 7, 8) arranged so as to form a micro-localisation device (100) of asymmetrical shape on a macroscopic scale.

9. Micro-localisation device (100) according to one of claims 1 to 8, including a plurality of zones (1, 2, 3, 4), each zone (1, 2, 3, 4) of the plurality of zones (1, 2, 3, 4), extending spatially over an area of macroscopic size, each zone (1, 2, 3, 4) of the plurality of zones (1, 2, 3, 4) including an elementary cell (11) or a tiling of a plurality of elementary cells (21, 22, 23, 24) extending over the respective area of said zone (1, 2, 3, 4), the zones (1, 2, 3, 4) of said plurality of zones (1, 2, 3, 4) being arranged around a junction point (99) common to an elementary cell (11, 21) of each of said zones (1, 2, 3, 4), each elementary cell of each of said zones (1, 2, 3, 4) around the junction point (99) being associated one-to-one, on the one hand, with an elementary area, and on the other hand, with a periodic spatial pattern (110, 210) function of the elementary area of said zone (1, 2, 3, 4).

10. Sample stage for microscopy apparatus including at least one microlocalisation device according to one of claims 1 to 9.

11. Measuring apparatus including an imaging instrument (60, 61), a sample stage (88, 900), a control unit (70) and at least one micro-localisation device (100, 700) according to one of claims 1 to 8, the micro-localisation device (100, 700) being secured to a sample or to the sample stage (88, 900), the imaging instrument (60, 61) being configured to acquire an image and the control unit (70) being configured to provide the coordinates of said image in the system of coordinates of the micro-localisation device (100, 700).

12. Measuring apparatus according to claim 11, further including a system for moving the sample stage integrating a device for measuring the movement of the sample stage in a system of coordinates of this movement system, the control unit (70) being configured to control a movement of the sample stage in the system of coordinates of the micro-localisation device (110).

13. Measuring apparatus according to claim 11, wherein the measuring apparatus includes a device for scanning an incident beam with respect to a sample, and wherein the control unit (70) is configured to control a movement by scanning of the incident beam and wherein the control unit (70) includes a system for processing the signal suitable for reconstructing an image point-by-point according to the scanning of the beam in the system of coordinates of the micro-localisation device (110).

14. Measuring apparatus according to claim 11, wherein the measuring apparatus includes a scanning probe microscopy apparatus with a tip and a system for moving said tip relatively to a sample to be analysed, wherein the control unit (70) includes a system for processing the signal suitable for reconstructing an image point-by-point according to the scanning movement of the scanning probe in the system of coordinates of the micro-localisation device (110).

15. Method for micro-localising (100) a sample including the following steps:
- securing a micro-localisation device (100) according to one of claims 1 to 9 with a sample stage or a sample to be analysed so as to define a system of spatial coordinates connected to said sample,
- arranging an imaging instrument so as to form an image of at least one elementary cell (11, 21, 22, 23, 24) of the micro-localisation device (100),
- processing said image of at least one elementary cell (11, 21, 22, 23, 24), to deduce from it an orientation and a position of said image in the system of spatial coordinates of the micro-localisation device (100).
